(19) **Europäisches Patentamt**

**European Patent Office**

**Office européen des brevets**

(11) **EP 0 594 849 B1**

(12) **EUROPEAN PATENT SPECIFICATION**

(45) Date of publication and mention
of the grant of the patent:
**10.05.2000 Bulletin 2000/19**

(21) Application number: **92905097.9**

(22) Date of filing: **20.02.1992**

(51) Int. Cl.$^7$: **F01C 1/22**, F02B 55/14

(86) International application number:
**PCT/JP92/00175**

(87) International publication number:
**WO 92/14909 (03.09.1992 Gazette 1992/23)**

(54) **ROTARY PISTON INTERNAL COMBUSTION ENGINE**

DREHKOLBEN-VERBRENNUNGSKRAFTMASCHINE

MOTEUR A COMBUSTION INTERNE A PISTON ROTATIF

(84) Designated Contracting States:
**DE FR GB IT SE**

(30) Priority: **21.02.1991 JP 22986391**

(43) Date of publication of application:
**04.05.1994 Bulletin 1994/18**

(73) Proprietors:
 • **KURAMASU, Yasuo**
  **753 Yamaguchi-ken (JP)**
 • **KURAMASU, Tokiko**
  **753 Yamaguchi-ken (JP)**

(72) Inventors:
 • **KURAMASU, Yasuo**
  **753 Yamaguchi-ken (JP)**

 • **KURAMASU, Tokiko**
  **753 Yamaguchi-ken (JP)**

(74) Representative:
  **Delhage, Einar et al**
  **Bergenstrahle & Lindvall AB**
  **Box 17704**
  **118 93 Stockholm (SE)**

(56) References cited:
  **FR-A- 2 118 669        FR-A- 2 303 940**
  **GB-A- 967 983          GB-A- 1 350 728**
  **JP-A- 51 104 110       JP-A- 60 039 361**
  **US-A- 4 417 862**

 • **PATENT ABSTRACTS OF JAPAN vol. 8, no. 154 (M-310)(1591) 18 July 1984& JP-A-59 51 184 ( ASAHI KATANTETSU K.K. ) 24 March 1984**

**Description**

BACKGROUND OF THE INVENTION

This invention relates to two planetary-motion engines (like planetary-motion rotary-piston engines or planetary-motion reciprocating engines), according to the first part of claim 1 (see GB-A-967983).

As for practically used internal combustion engines, we have, apart from the gas turbine engine, the reciprocating engine and the Wankel type rotary-piston engine.

The Wankel type rotary-piston engine has many advantages, but also the following disadvantages:

The Wankel type rotary-piston engine cannot obtain a compression ratio high enough to be fully suitable for a Diesel engine, and it has two constrictions on the minor axis of the contour of the normal section of the tubular cavity in the housing. This constriction divides the working chamber along the minor axis into two parts, the trailing side and the leading side. Because of this, the trailing side is compressed at the same time as the leading side is expanded near the top dead centre. Therefore mechanical loss occurs.

There is the following prior art for solution of the above mentioned problems.

JP, A, 49-46009 (May 2, 1974, Swiss national patent No. 012260/72), discloses a rotary-piston engine comprising:

(a) a housing containing a tubular cavity,
(b) parallel guide members fixed to the base of the tubular cavity,
(c) an eccentric wheel with a pilot wheel installed between the parallel guide members,
(d) a crank shaft in which the main shaft of the eccentric wheel is attached to the crank pin,
(e) a rotating piston attached to the eccentric wheel, and
(f) only one gear train including an outer gear fixed to the crank pin and an inner gear fixed to the rotating piston.

This rotary-piston engine has the following characteristics:

As the crank shaft revolves, the pilot wheel slides between the parallel guide members at the same time as it makes a reciprocating motion, and it also rotates on its own axis at the same time as it also revolves around the crank pin. The eccentric wheel rotates on its own axis at the same time as it revolves around the crank pin. As a result, the vertex of the rotating piston describes the curve determining the contour of the normal section of the tubular cavity as the crank shaft revolves.

Further, in the international search report of this international application we find the following prior art.

JP, A, 60-39361 (March 1, 1985, John Fenton, U.S.A.), discloses a rotary-piston engine comprising:

(a) a housing containing a tubular cavity,
(b) an eccentric shaft which is a output shaft,
(c) an eccentric ring attached to the eccentric shaft,
(d) a rotating piston attached to the eccentric ring,
(e) one gear pair consisting of an outer gear fixed to the eccentric shaft and an inner gear fixed to the inside of the eccentric ring, and
(f) a second gear pair consisting of an outer gear fixed to the outside of the eccentric ring and an inner gear fixed to the rotating piston.

This rotary-piston engine has the following characteristics:

Because no gear is fixed to the housing, the vertex of the rotating piston cannot describe the curve determining the contour of the normal section of the tubular cavity, when the rotating piston is not installed in the tubular cavity.

JP, A, 51-104110 (September 14, 1976, Kimiaki Kusano, Japan), discloses materials of the surface of the rotating piston of the Wankel type rotary-piston engine.

As far as an internal combustion engine is concerned, the higher its expansion ratio becomes, the higher its thermal efficiency becomes. Because of this, to attain a high thermal efficiency, we must obtain a substantially high expansion ratio. In other words, we must complete combustion before the beginning of the expansion. However, in the case of practically used high revolution internal combustion engines, we cannot secure enough time for combustion neither in the reciprocating engine nor in the Wankel type rotary-piston engine. Because of this, the expansion ratio substantially decreases, and the thermal efficiency becomes lower.

The object of this invention is to make a rotary-piston engine

(a) without impediment from reciprocating mass,

(b) without any constriction on the contour of the normal section of the tubular cavity in the housing,

(c) with enough time for combustion,

(d) with a high enough compression ratio, and to make a reciprocating engine without impediment from reciprocating mass.

DISCLOSURE OF THE INVENTION

To reach the object of the above invention, it is provided an engine according to claim 1. Planetary motion type engines (planetary-motion rotary-piston engines or planetary-motion reciprocating engines) of this invention have the following characteristics:

(a) The planetary-motion rotary-piston engine comprises a housing, a crank shaft, an eccentric shaft, a rotating piston, two gear units, and connecting ducts for gas exchange.

The housing contains a tubular cavity with the shape of a right noncircular cylinder. The curve determining the contour of the normal section of the tubular cavity is a translated composite trochoid in which a composite trochoid has been parallelly translated outwards a fixed distance $t$ along a normal line to the composite trochoid, provided that $t \cong 0$, and that the inner envelope and the outer envelope of the family of curves of the composite trochoid have at least two points of osculation. In the case when $t=0$, the curve determining the contour of the normal section of the tubular cavity is the composite trochoid. Further we can also use the outer envelope of the family of curves determining the contour of the normal section of the rotating piston as the contour of the normal section of the tubular cavity.

Here the composite trochoid is the locus of the generic point of a peritrochoid in combination with a hypotrochoid, provided that the base circle of the peritrochoid is fixed to the eccentric arm of the hypotrochoid in order that the base circle of the peritrochoid and the rolling circle of the hypotrochoid should become concentric, and provided that the eccentric arm of the peritrochoid is fixed to the generic arm of the hypotrochoid in order that the centre of the rolling circle of the peritrochoid should become the generic point of the hypotrochoid.

The crank shaft comprises a crank main shaft and a crank pin, and the function of the crank shaft is equivalent to the function of the eccentric arm of the hypotrochoid. The crank main shaft is pierced through the two bases of the tubular cavity along its axis. In the case when the diameter of the rolling circle of the hypotrochoid is longer than the radius of the base circle of the hypotrochoid, we can also use a crank shaft (so-called an eccentric shaft) whose main shaft is pierced through its crank pin.

The eccentric shaft comprises an eccentric main shaft and an eccentric wheel, and the function of the eccentric shaft is equivalent to the function of the generic arm of the hypotrochoid and to the function of the eccentric arm of the peritrochoid. The eccentric main shaft is attached to the crank pin.

The rotating piston is attached to the eccentric wheel and has the shape of a right prism whose bases slide continuously on the bases of the tubular cavity. Each of the vertices of the normal section of the rotating piston has the form of a circular arc whose centre is the generic point of the composite trochoid and whose radius is equal to the fixed distance $t$. In the case when $t=0$, each of the vertices of the normal section of the rotating piston is the generic point of the composite trochoid. Further we can also use the composite trochoid as the contour of the normal section of the rotating piston.

One of the two gear units consists of a fixed gear fixed to the base of the tubular cavity and a rolling gear fixed to the eccentric main shaft, or of a fixed gear fixed to the base of the tubular cavity, a rolling gear fixed to the eccentric main shaft, and at least one idle gear. The function of these fixed gears is equivalent to the function of the base circle of the hypotrochoid. The function of these rolling gears is equivalent to the function of the rolling circle of the hypotrochoid.

The other of the two gear units consists of a fixed gear fixed to the crank pin and a rolling gear fixed to the rotating piston, or of a fixed gear fixed to the crank pin, a rolling gear fixed to the rotating piston, and at least one idle gear. The function of these fixed gears is equivalent to the function of the base circle of the peritrochoid. The function of these rolling gears is equivalent to the function of the rolling circle of the peritrochoid.

The connecting ducts for gas exchange make openings into working chambers formed by the inside face of the tubular cavity and the lateral faces of the rotating piston. Here the rotating motion of the rotating piston controls the opening and closing of the connecting ducts for gas exchange.

(b) Applying this planetary-motion rotary-piston engine, we can get planetary-motion engines with the following characteristics:

One planetary-motion rotary-piston engine characterized by a composite trochoid in which the ratio between the radius of the hypotrochoid's base circle and the radius of its rolling circle is 2:1, and the ratio between the radius of the peritrochoid's base circle and the radius of its rolling circle is 2:3.

One planetary-motion rotary-piston engine characterized by a composite trochoid in which the ratio between the radius of the hypotrochoid's base circle and the radius of its rolling circle is 3:2, and the ratio between the radius of the peritrochoid's base circle and the radius of its rolling circle is 1:2.

Finally, the above-mentioned planetary-motion reciprocating engine characterized by installing a reciprocating piston on the generic point of a composite trochoid, by putting a cylinder together with the reciprocating piston, and by using a crank mechanism which exploits the reciprocating motion generated by the generic point of the composite trochoid. In this composite trochoid, the ratio between the radius of the hypotrochoid's base circle and the radius of its rolling circle is 2:1, and the ratio between the radius of the peritrochoid's base circle and the radius of its rolling circle is 1:2.

We will now explain the terms used in this description.

For short we call the planetary-motion rotary-piston engine the rotary-piston engine, and we call the planetary-motion reciprocating engine the reciprocating engine.

As for the right noncircular cylinder, in the case when the normal section of a right circular cylinder is not a circle, we call this solid body a right noncircular cylinder.

Within the tubular cavity in the housing, we call the flat surfaces at both ends of the tubular cavity the bases of the tubular cavity, and we call the curved surface which makes up the tubular cavity the lateral face of the tubular cavity. A section which is perpendicular to the axis of the tubular cavity we call a normal section of the tubular cavity. Further these bases and this lateral face together we call the inside face of the tubular cavity.

As for the rotating piston, a section which is perpendicular to the axis of rotation of the rotating piston we call a normal section of the rotating piston. Generally a vertex is a point, but in this description a corner consisting of an arc instead of a point we also call a vertex.

A solid body enclosed by polygons is called a polyhedron, these polygons are called the surfaces of the polyhedron, the sides of these polygons are called the edges of the polyhedron, and the vertices of these polygons are called the vertices of the polyhedron. Particularly, if two surfaces of a polyhedron are parallel and the other surfaces are parallel to one straight line, this polyhedron is called a prism, the parallel surfaces are called the bases of the prism, the surfaces parallel to one straight line are called the lateral faces of the prism, and the intersection of two adjacent lateral faces is called the lateral edge of the prism. Further, when the lateral edges of a prism meet the base of this prism perpendicularly, this prism is called a right prism.

In geometry each of the lateral faces of a right prism is flat, and each of the lateral edges of the right prism is a straight line, but in this description a right prism can also have cylindrical lateral faces and can also have cylindrical lateral edges. In other words, if the sides of the normal section of a right prism are curved, we still call this solid body a right prism. The same is the case if the vertices of the normal section of a right prism are arcs instead of points.

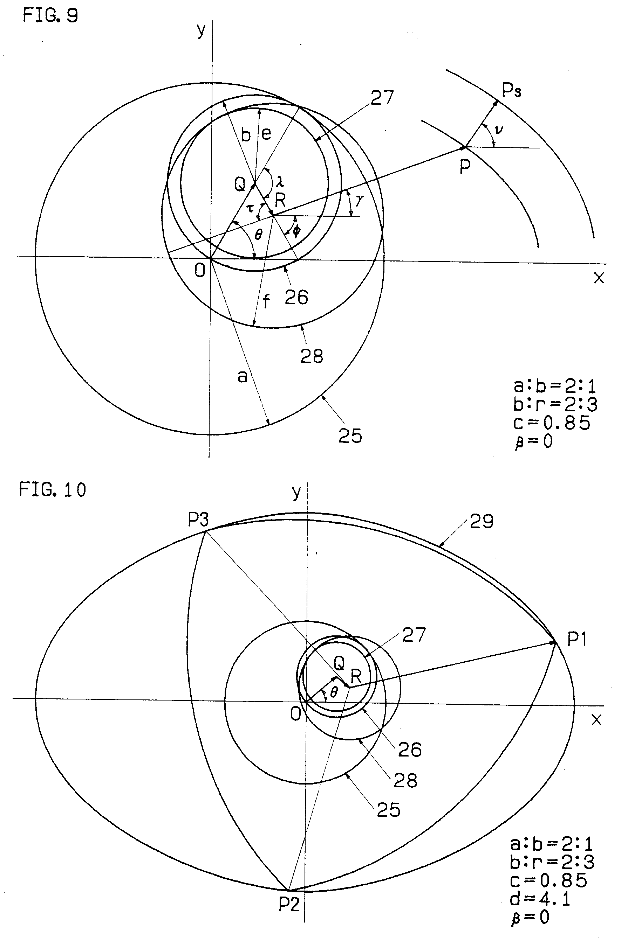

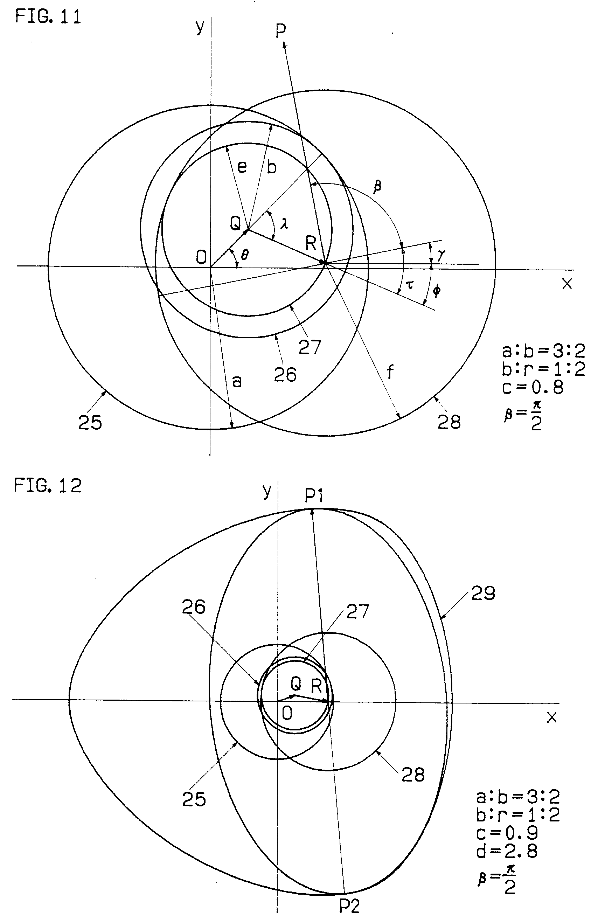

With the help of Figs. 9 - 12 we will now explain the composite trochoid which determines the contour of the normal section of the tubular cavity in the housing.

A base circle A 25 with the radius $a$ and a rolling circle B 26 with the radius $b$ generate a hypotrochoid, and a base circle E 27 with the radius $e$ and a rolling circle F 28 with the radius $f$ generate a peritrochoid.

As for the hypotrochoid, the fixed point R on the prolongation of the radius of the rolling circle B 26 is called the generic point of the hypotrochoid, the distance OQ is called the eccentric quantity of the hypotrochoid, and the distance QR is called the generic radius of the hypotrochoid. Further, in this description we call the segment OQ the eccentric arm of the hypotrochoid, and we call the segment QR the generic arm of the hypotrochoid.

As for the peritrochoid, the fixed point P on the prolongation of the radius of the rolling circle F 28 is called the generic point of the peritrochoid, the distance QR is called the eccentric quantity of the peritrochoid, and the distance RP is called the generic radius of the peritrochoid. Further, in this description we call the segment QR the eccentric arm of the peritrochoid, and we call the segment RP the generic arm of the peritrochoid.

The base circle E 27 is fixed to the point Q on the eccentric arm OQ of the hypotrochoid, in order that the base circle E 27 and the rolling circle B 26 should become concentric. Thus the rolling circle B 26 can rotate on the point Q on the eccentric arm OQ of the hypotrochoid, while the base circle E 27 cannot rotate on the same point Q.

According to the properties of a hypotrochoid, the rolling circle B 26 rotates on the point Q on the eccentric arm OQ of the hypotrochoid at the same time as it revolves around the origin O. Thus the point Q on the eccentric arm OQ of the hypotrochoid also revolves around the origin O. As the rolling circle B 26 rotates on its own axis, the base circle E 27 fixed to the point Q on the eccentric arm OQ of the hypotrochoid therefore revolves around the origin O, but does not rotate on its own axis. Here the base circle E 27 and the rolling circle B 26 are concentric. As the rolling circle B 26 rotates on its own axis, the generic point R of the hypotrochoid therefore revolves around the base circle E 27.

The eccentric arm QR of the peritrochoid is fixed to the generic arm QR of the hypotrochoid, in order that the centre of the rolling circle F 28 should become the generic point R of the hypotrochoid. Thus the centre R of the rolling circle F 28 also revolves around the base circle E 27, as the rolling circle B 26 rotates on its own axis. Further, because the base circle E 27 and the rolling circle F 28 generate the peritrochoid, the rolling circle F 28 rolls (not slides) along the external circumference of the base circle E 27, inscribing it, as the rolling circle B 26 rotates on its own axis.

4

In a coordinate system with the point Q as an origin the point P therefore generates the peritrochoid, as the rolling circle B 26 rotates on its own axis.

However, the centre R of the rolling circle F 28 is the generic point of the hypotrochoid. In a coordinate system with the point O as origin the centre R of the rolling circle F 28 therefore generates the hypotrochoid, as the rolling circle B 26 rotates on its own axis. Further the eccentric arm of the peritrochoid has the segment QR in common with the generic arm of the hypotrochoid. Consequently the point P generates a locus composed of the hypotrochoid and the peritrochoid. In this description we call the locus 29 of the point P a composite trochoid, and we call the point P the generic point of the composite trochoid.

Therefore the composite trochoid is the locus of the generic point P of the peritrochoid in combination with the hypotrochoid, provided that the base circle E 27 of the peritrochoid is fixed to the eccentric arm OQ of the hypotrochoid, in order that the base circle E 27 of the peritrochoid and the rolling circle B 26 of the hypotrochoid should become concentric, and provided that the eccentric arm QR of the peritrochoid is fixed to the generic arm QR of the hypotrochoid, in order that the centre of the rolling circle F 28 of the peritrochoid should become the generic point R of the hypotrochoid.

Consequently the rolling circle F 28 makes a planetary motion on the point Q at the same time as it revolves around the origin O. Because each of the vertices of the normal section of the rotating piston is the generic point P on the prolongation of the radius of the rolling circle F 28, the rotating piston makes the planetary motion on the point Q at the same time as it revolves around the origin O.

If we here let the distance RP be $k$, the coordinates of the generic point $P(x,y)$ of the composite trochoid can be expressed as below, provided that $\beta$ is the phase angle of the generic point P and that it is a constant.

$$x=(a-b)\cos\theta+(f-e)\cos\phi+k\cos(\gamma+\beta)$$

$$y=(a-b)\sin\theta+(f-e)\sin\phi+k\sin(\gamma+\beta)$$

Here the value of $\phi$ becomes

$$\phi=\theta+\lambda$$

Since $\lambda=-a\theta/b$, we get

$$\phi=(1-a/b)\theta$$

Here the value of $\gamma$ becomes

$$\gamma=\theta+\lambda+\tau$$

Since $\tau=-e\lambda/f$, and $\lambda=-a\theta/b$, we get

$$\tau=ea\theta/fb$$

$$\therefore \gamma=(1-a/b+ea/fb)\theta$$

Therefore the coordinates of the generic point $P(x,y)$ become

$$x=(a-b)\cos\theta+(f-e)\cos(1-a/b)\theta+k\cos\{(1-a/b+ea/fb)\theta+\beta\}$$

$$y=(a-b)\sin\theta+(f-e)\sin(1-a/b)\theta+k\sin\{(1-a/b+ea/fb)\theta+\beta\}$$

Here we let the ratio between a radius $e$ of the base circle E 27 and a radius $b$ of the rolling circle B 26 be $c$, and get $e=cb$. We let the ratio between a radius $f$ of the rolling circle F 28 and the radius $e$ of the base circle E 27 be $n$, and get $f=ne$. Further, when the radius of the base circle E 27 is equal to the radius of the rolling circle B 26, we let the radius of the rolling circle F 28 be $r$, and get $r=nb$.

$$\therefore f=cr$$

$$\therefore f-e=cr-cb$$

$$\therefore\ 1-a/b+ea/fb=1-a/b+a/r$$

We let the ratio between $k$ and the radius $f$ of the rolling circle F 28 be $d$, and get $k=df$.

$$\therefore\ k=dcr$$

Therefore the coordinates of the generic point P$(x,y)$ of the composite trochoid can be expressed

$$x=(a-b)\cos\theta+c(r-b)\cos(1-a/b)\theta+dcr\cos\{(1-a/b+a/r)\theta+\beta\} \qquad (1)$$

$$y=(a-b)\sin\theta+c(r-b)\sin(1-a/b)\theta+dcr\sin\{(1-a/b+a/r)\theta+\beta\} \qquad (2)$$

Here we let the phase angle of the point Q be $\beta a$, and the phase angle of the point R be $\beta b$. Then the equations (1) and (2) can be expressed as below, provided that $\beta a$, $\beta b$ are constants.

$$x=(a-b)\cos(\theta+\beta a)+c(r-b)\cos\{(1-a/b)\theta+\beta b\}\ +dcr\cos\{(1-a/b+a/r)\theta+\beta\} \qquad (3)$$

$$y=(a-b)\sin(\theta+\beta a)+c(r-b)\sin\{(1-a/b)\theta+\beta b\}\ +dcr\sin\{(1-a/b+a/r)\theta+\beta\} \qquad (4)$$

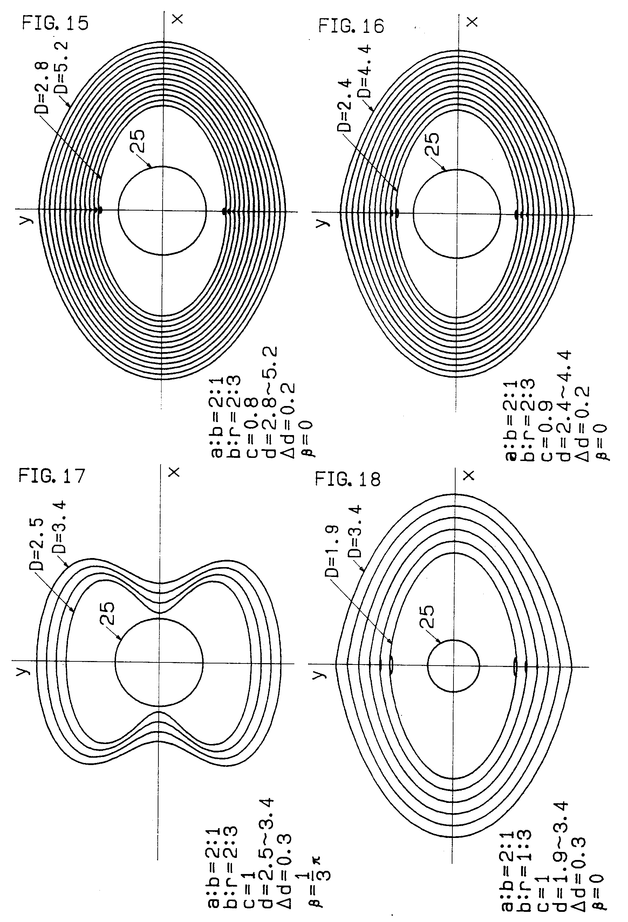

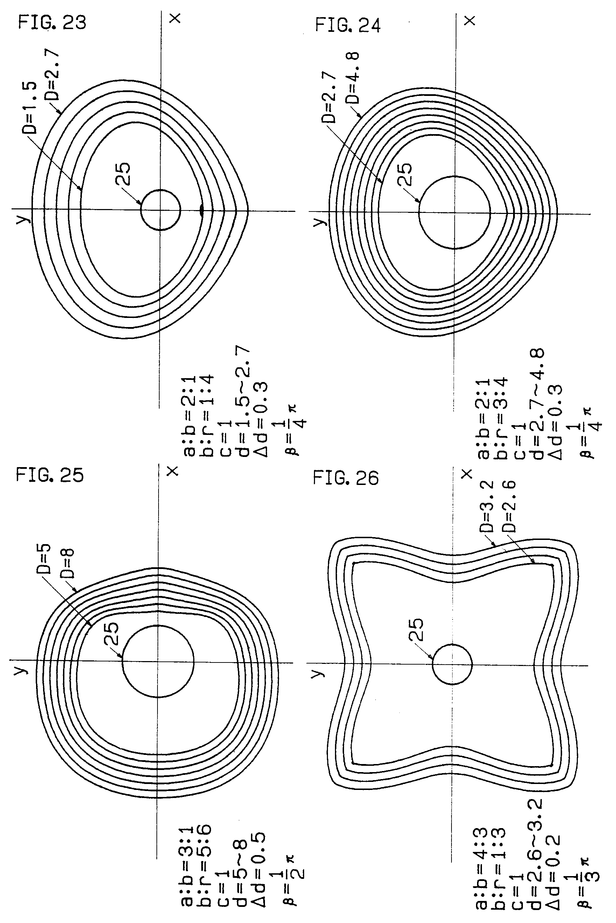

The equations (1) and (2) describe, with the help of $a$, $b$, $c$, $d$, $r$, and $\beta$, different composite trochoides. In Figs. 15 - 26 representative composite trochoides are shown.

The case when we use the translated composite trochoid as the contour of the normal section of the tubular cavity in the housing:

The coordinates of the generic point Ps$(xs,ys)$ which was parallelly translated outwards the fixed distance $t$ along a normal line to the composite trochoid can be expressed as below, provided that the angle made by the $x$-axis and the normal line at the generic point P$(x,y)$ is $\nu$.

$$xs=(a-b)\cos\theta+c(r-b)\cos(1-a/b)\theta+dcr\cos\{(1-a/b+a/r)\theta+\beta\}+t\cos\nu$$

$$ys=(a-b)\sin\theta+c(r-b)\sin(1-a/b)\theta+dcr\sin\{(1-a/b+a/r)\theta+\beta\}+t\sin\nu$$

where,

$$\tan\nu=-(dx/d\theta)/(dy/d\theta)$$

In this case, the shape of the vertex of the normal section of the rotating piston becomes a circular arc whose centre is the generic point P of the composite trochoid and whose radius is equal to the fixed distance $t$. Consequently the shape of the lateral edges of the rotating piston becomes cylindrical. Thus, as the rotating piston revolves, the line of contact between the cylindrical lateral edge of the rotating piston and the lateral face of the tubular cavity moves continuously on the surface of the cylindrical lateral edge of the rotating piston. Therefore this line of contact is not all the time in the same position on the cylindrical lateral edge of the rotating piston. These are the same techniques as those used in the Wankel type rotary-piston engine.

Determining the curves linking the vertices of the normal section of the rotating piston: If the lateral faces of the rotating piston do not collide with the lateral face of the tubular cavity, there is no restriction to the curves linking the vertices of the normal section of the rotating piston.

When the inner envelope of the family of curves determining the contour of the normal section of the tubular cavity is used as the contour of the normal section of the rotating piston, the minimal volume of the working chamber becomes the smallest possible. The compression ratio increases, which is favourable. Because of this, we generally use the inner envelope of the family of curves determining the contour of the normal section of the tubular cavity for the contour of the normal section of the rotating piston. Therefore the curve determining the contour of the normal section of the rotating piston becomes either the inner envelope of the family of curves of the composite trochoid or the inner envelope of the family of curves of the translated composite trochoid.

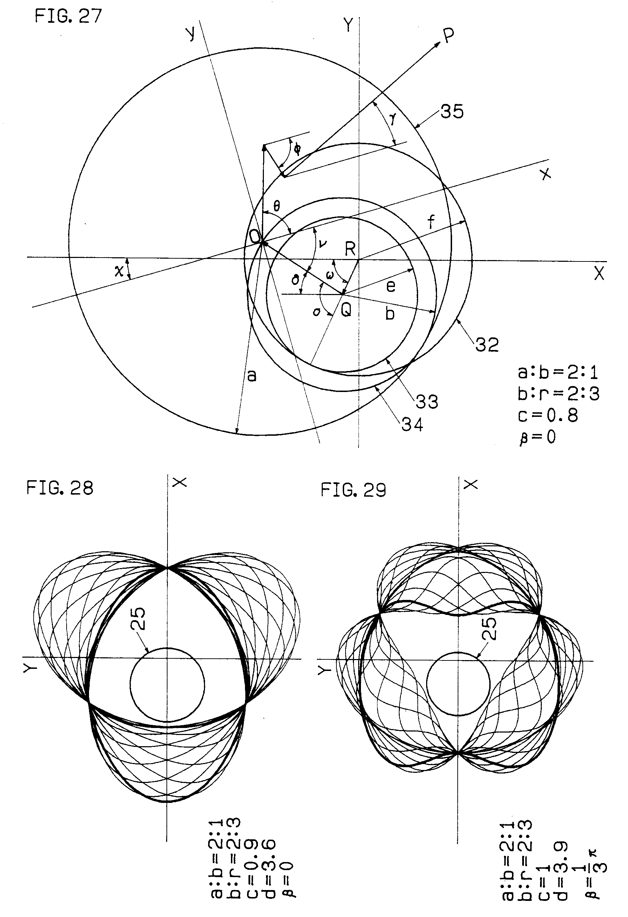

With the help of Fig. 27 we will now explain the family of curves of the composite trochoid.

In order that the centre of a circle F 32 should become the origin R of an $XY$-coordinate system, we fix the circle F 32 to the $XY$-coordinate system. Further we let the circle F 32 be a base circle F and a circle E 33 be a rolling circle E. In the $XY$-coordinate system the rolling circle E and the base circle F generate a hypotrochoid.

In the $XY$-coordinate system we fix the centre of a circle B 34 to the point Q on the eccentric arm RQ of the hypotrochoid, in order that the circle B 34 and the circle E 33 should become concentric, and we let the circle B 34 be a base circle B. In order that a circle A 35 may rotate on the generic point O of the hypotrochoid, we install the centre of the circle A 35 on the generic point O of the hypotrochoid and let the circle A 35 be a rolling circle A. The rolling circle A and the base circle B generate a peritrochoid.

In order that the origin of an *xy*-coordinate system should become the generic point O of the hypotrochoid in the *XY*-coordinate system, we fix the *xy*-coordinate system to the rolling circle A of the peritrochoid in the *XY*-coordinate system. Then the origin of the *xy*-coordinate system is parallelly translated to the generic point O of the hypotrochoid in the *XY*-coordinate system, and the *xy*-coordinate system rotates on the above generic point O, according to the rotation of the rolling circle A of the peritrochoid in the *XY*-coordinate system. When we will describe the composite trochoid in this *xy*-coordinate system, we can get the family of curves of the composite trochoid.

Here we let the coordinates of the generic point O of the hypotrochoid in the *XY*-coordinate system be $(Xo, Yo)$, the rotating angle of the rolling circle A of the peritrochoid in the *XY*-coordinate system be $\chi$, and the coordinates of the generic point of the composite trochoid in the *xy*-coordinate system be $(x, y)$. Then the coordinates $(X, Y)$ of the family of curves of the composite trochoid can be expressed

$$X = Xo + x\cos\chi - y\sin\chi$$

$$Y = Yo + x\sin\chi + y\cos\chi$$

where

$$Xo = (f-e)\cos(\omega+\pi) + (a-b)\cos(\delta+\pi)$$

$$Yo = (f-e)\sin(\omega+\pi) + (a-b)\sin(\delta+\pi)$$

In the same way as the composite trochoid, the value of $\delta$ becomes

$$\delta = \omega + \sigma$$

Since $\sigma = -f\omega/e$, we get

$$\delta = (1 - f/e)\omega$$

The value of $\chi$ becomes

$$\chi = \omega + \sigma + \nu$$

Since $\nu = -b\sigma/a$, and $\sigma = -f\omega/e$, we get

$$\nu = bf\omega/ae .$$

$$\therefore\ \chi = (1 - f/e + bf/ae)\omega$$

Here $e = cb$, and $f = cr$.

$$\therefore\ f - e = cr - cb$$

$$\therefore\ \delta = (1 - r/b)\omega$$

$$\therefore\ \chi = (1 - r/b + r/a)\omega$$

Therefore the coordinates $(X, Y)$ of the family of curves of the composite trochoid can be expressed

$$X = Xo + x\cos(1 - r/b + r/a)\omega - y\sin(1 - r/b + r/a)\omega \tag{5}$$

$$Y = Yo + x\sin(1 - r/b + r/a)\omega + y\cos(1 - r/b + r/a)\omega \tag{6}$$

where

$$Xo = -c(r-b)\cos\omega - (a-b)\cos(1-r/b)\omega$$

$$Yo = -c(r-b)\sin\omega - (a-b)\sin(1-r/b)\omega$$

$$x = (a-b)\cos\theta + c(r-b)\cos(1-a/b)\theta + dcr\cos\{(1-a/b+a/r)\theta+\beta\}$$

$$y = (a-b)\sin\theta + c(r-b)\sin(1-a/b)\theta + dcr\sin\{(1-a/b+a/r)\theta+\beta\}$$

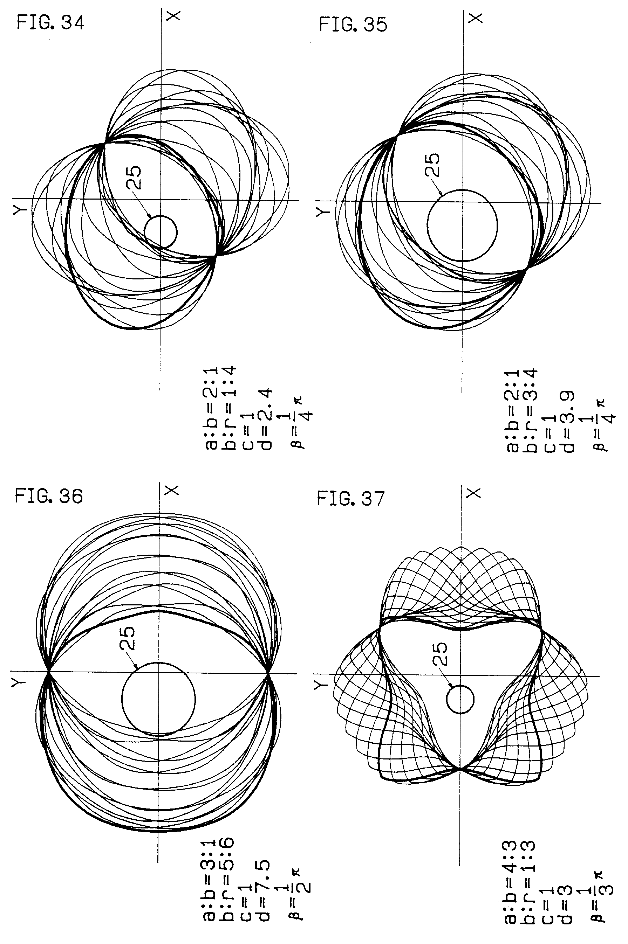

In Figs. 28 -37 representative families of curves of the composite trochoid are shown. The composite trochoid itself is shown with a thick line.

Now, if this invented rotary-piston engine needs working chambers with changing volume, the rotating piston must have at least two lateral edges which slides continuously on the lateral face of the tubular cavity. Therefore the outer envelope and the inner envelope of the family of curves of the composite trochoid must have at least two points of osculation, as shown in Figs. 28 - 37. Thus we can use all composite trochoides shown in Figs. 15 - 26 as the contour of the normal section of the tubular cavity.

Further the family of curves $(Xs, Ys)$ of the translated composite trochoid also have envelopes and can be expressed

$$Xs = Xo + xs\cos(1-r/b+r/a)\omega - ys\sin(1-r/b+r/a)\omega$$

$$Ys = Yo + xs\sin(1-r/b+r/a)\omega + ys\cos(1-r/b+r/a)\omega$$

where

$$xs = (a-b)\cos\theta + c(r-b)\cos(1-a/b)\theta + dcr\cos\{(1-a/b+a/r)\theta+\beta\} + t\cos\nu$$

$$ys = (a-b)\sin\theta + c(r-b)\sin(1-a/b)\theta + dcr\sin\{(1-a/b+a/r)\theta+\beta\} + t\sin\nu$$

$$\tan\nu = -(dx/d\theta)/(dy/d\theta)$$

The case when we install an idle circle between a trochoid's base circle and its rolling circle:

In this case, the fixed point on the prolongation of the radius of the rolling circle of the trochoid generates a locus, as the idle circle rolls (not slides) along the circumference of the base circle of the trochoid. In this description we call a composite trochoid characterized in that at least one idle circle is installed between a trochoid's base circle and its rolling circle a quasi-composite trochoid.

The case when the curve determining the contour of the normal section of the rotating piston is the composite trochoid:

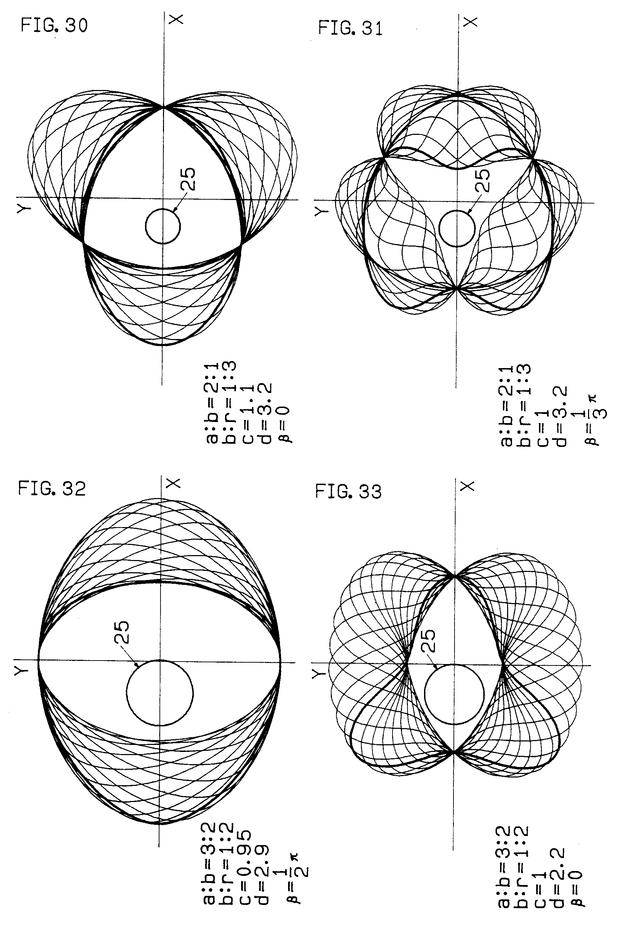

As we see in Figs. 10 and 32, we can use the outer envelope of the family of curves determining the contour of the normal section of the rotating piston as the contour of the normal section of the tubular cavity.

In the same way as the family of curves of the composite trochoid, we let the circle F 32 be a base circle F, and let the circle E 33 be a rolling circle E. The rolling circle E and the base circle F generate a hypotrochoid. In order that the circle B 34 and the circle E 33 should become concentric, we fix the centre of the circle B 34 to the point Q on the eccentric arm RQ of the hypotrochoid and let the circle B 34 be a base circle B. In order that the circle A 35 may rotate on the generic point O of the hypotrochoid, we install the centre of the circle A 35 on the generic point O of the hypotrochoid and let the circle A 35 be a rolling circle A. The rolling circle A and the base circle B generate a peritrochoid. Further we let the ratio between the generic radius of the peritrochoid and the radius $a$ of the rolling circle A of the peritrochoid be $h$ and express the generic radius of the peritrochoid as $ha$.

Therefore the coordinates of the generic point $(v, w)$ of a composite trochoid with the above structure can be expressed as below, provided that $\beta c$ is the phase angle of the generic point $(v, w)$ and that it is a constant.

$$v = (f-e)\cos(\omega+\pi) + (a-b)\cos(\delta+\pi) + ha\cos(\chi+\beta c+\pi)$$

$$w = (f-e)\sin(\omega+\pi) + (a-b)\sin(\delta+\pi) + ha\sin(\chi+\beta c+\pi)$$

In the same way as the family of curves of the composite trochoid,

$$v = -c(r-b)\cos\omega - (a-b)\cos(1-r/b)\omega - ha\cos\{(1-r/b+r/a)\omega+\beta c\}$$

$$w=-c(r-b)\sin\omega-(a-b)\sin(1-r/b)\omega-ha\sin\{(1-r/b+r/a)\omega+\beta c\}$$

When we will describe the composite trochoid generated by the generic point $(v,w)$ in the plane fixed to the rolling circle F 28 of the composite trochoid expressed by equations (1) and (2), we get the family of curves $(x,y)$ of the above composite trochoid. Then this family of curves $(x,y)$ can be expressed as below, provided that $\beta e$ is the phase angle of the above composite trochoid and that it is a constant.

$$x=(a-b)\cos\theta+c(r-b)\cos(1-a/b)\theta+v\cos\gamma-w\sin\gamma \qquad (7)$$

$$y=(a-b)\sin\theta+c(r-b)\sin(1-a/b)\theta+v\sin\gamma+w\cos\gamma \qquad (8)$$

where

$$\gamma=(1-a/b+a/r)\theta+\beta e$$

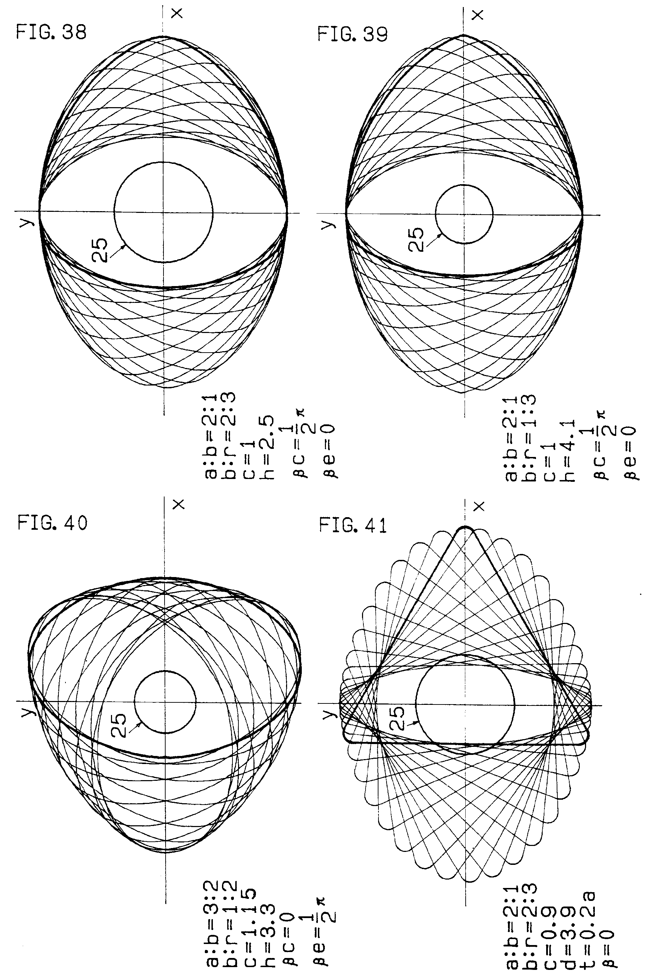

In Figs. 38 - 40 some representative families of curves expressed by equations (7) and (8) are shown. The composite trochoid generated by the generic point $(v,w)$ is shown with a thick line.

Therefore we can use the composite trochoid generated by the generic point $(v,w)$ as the contour of the normal section of the rotating piston, and we can use the outer envelope of the family of curves of this composite trochoid as the contour of the normal section of the tubular cavity.

The case when the shape of the vertex of the normal section of the rotating piston is a circular arc:

In equations (7) and (8), when $v=dcr$ , and $w=0$, equations (7) and (8) express the coordinates of the generic point P of the composite trochoid expressed by equations (1) and (2). In the case when $\beta e=0$, equations (7) and (8) thus express the coordinates of the generic point P1 in Fig. 10, when $\beta e=-2\pi/3$ the coordinates of the generic point P2 in Fig. 10, when $\beta e=-4\pi/3$ the coordinates of the generic point P3 in Fig. 10.

Therefore we can use a circular arc whose centre is the generic point P of the composite trochoid expressed by equations (1) and (2) as the shape of the vertex of the normal section of the rotating piston, and we can use the outer envelope of the family of curves determining the circular-arc-shaped vertices of the normal section of the rotating piston as the contour of the normal section of the tubular cavity. If the curves linking the circular-arc-shaped vertices do not interfere with the outer envelope of the family of curves determining the circular-arc-shaped vertices, there is no restriction to the curves linking the circular-arc-shaped vertices. In Fig. 41 the family of curves determining the contour {the circular-arc-shaped vertices ( whose radii are equal to $t$) and the straight lines connecting them} of the normal section of the rotating piston is shown.

Actions:

In the structure of this invented rotary-piston engine the curve determining the contour of the normal section of the tubular cavity in the housing is either the composite trochoid or the translated composite trochoid. Each of the vertices of the normal section of the rotating piston is either the generic point P of the composite trochoid, or it has the form of a circular arc whose centre is the generic point P of the composite trochoid and whose radius is equal to the fixed distance t.

Accordingly all the edges of the rotating piston slide continuously on the inside face of the tubular cavity. Further the rotating piston makes a planetary motion on the point Q at the same time as it revolves around the origin O.

Consequently the volume of the working chambers changes, and the opening and closing of the connecting ducts for gas exchange are controlled.

BRIEF DESCRIPTION OF THE DRAWINGS

Figs. 1 - 5 show a first embodiment of this invention.
Fig. 1 is a perspective view taken along the lines C1 - C2 of Fig. 2.
Fig. 2 is a sectional view taken along the lines B1 - B2 of Fig. 1.
Fig. 3 is a sectional view taken along the lines C1 - C2 of Fig. 2.
Fig. 4 is a sectional view taken along the lines D2 - D1 of Fig. 2.
Fig. 5 is a sectional view taken along the lines E1 - E2 of Fig. 2.

Fig. 6 is a sectional view showing a second embodiment of this invention.

Fig. 7 is a sectional view showing a third embodiment of this invention.

Fig. 8 shows a fourth embodiment of this invention.

Fig. 9 shows the elementary geometric structure of the composite trochoid in the first embodiment.

Fig. 10 shows the geometric relation between the composite trochoid and the rotating piston in the first embodiment.

Fig. 11 shows the elementary geometric structure of the composite trochoid in the second and third embodiments.

Fig. 12 shows the geometric relation between the composite trochoid and the rotating piston in the second and third embodiments.

Figs. 13 and 14 show the elementary geometric structure of the fourth embodiment and show the geometric relation between a counter weight and a reciprocating piston.

Figs. 15 - 26 show composite trochoides for different values of *a*, *b*, *r*, *c*, *d*, and β.

Fig. 27 shows the elementary geometric structure of the family of curves of the composite trochoid.

Figs. 28 - 37 show families of curves of the composite trochoid for different values of *a*, *b*, *r*, *c*, *d*, and β.

Figs. 38 - 40 show families of curves determining the contour of the normal section of the rotating piston of this invented rotary-piston engine.

Fig. 41 shows the family of curves determining the contour (the circular-arc-shaped vertices and the straight lines connecting them) of the normal section of the rotating piston of this invented rotary-piston engine.

Figs. 42 - 59 show the operating situations of the first embodiment.

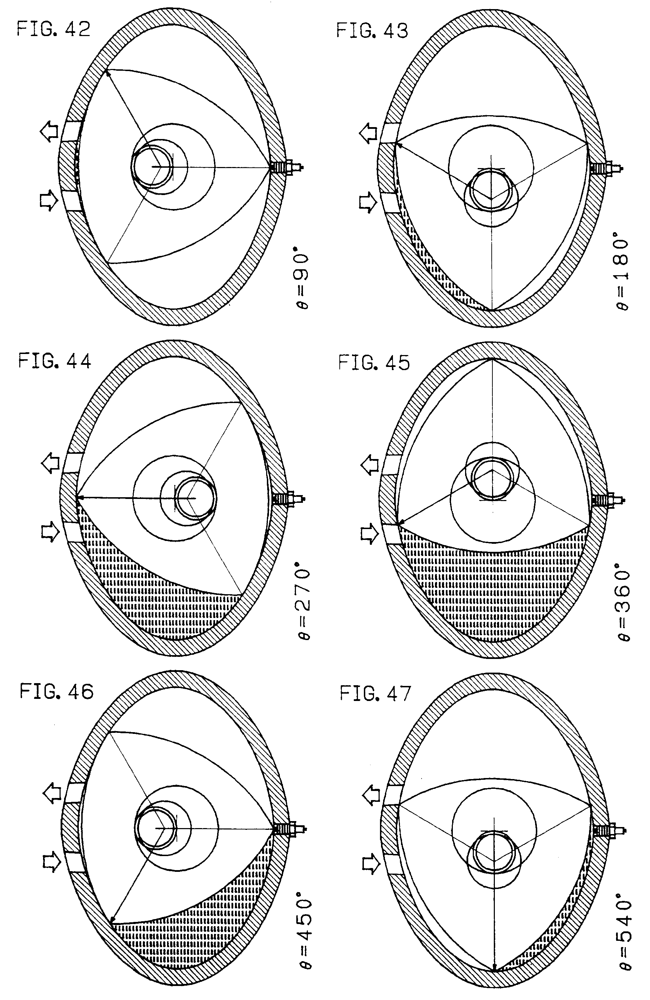

Fig. 42 shows the intake stroke at the T.D.C. (top dead centre).

Fig. 43 shows the intake stroke at 90 after the T.D.C.

Fig. 44 shows the intake stroke at 180 after the T.D.C.

Fig. 45 shows the intake stroke at the B.D.C. (bottom dead centre).

Fig. 46 shows the compression stroke at 180 before the T.D.C.

Fig. 47 shows the compression stroke at 90 before the T.D.C.

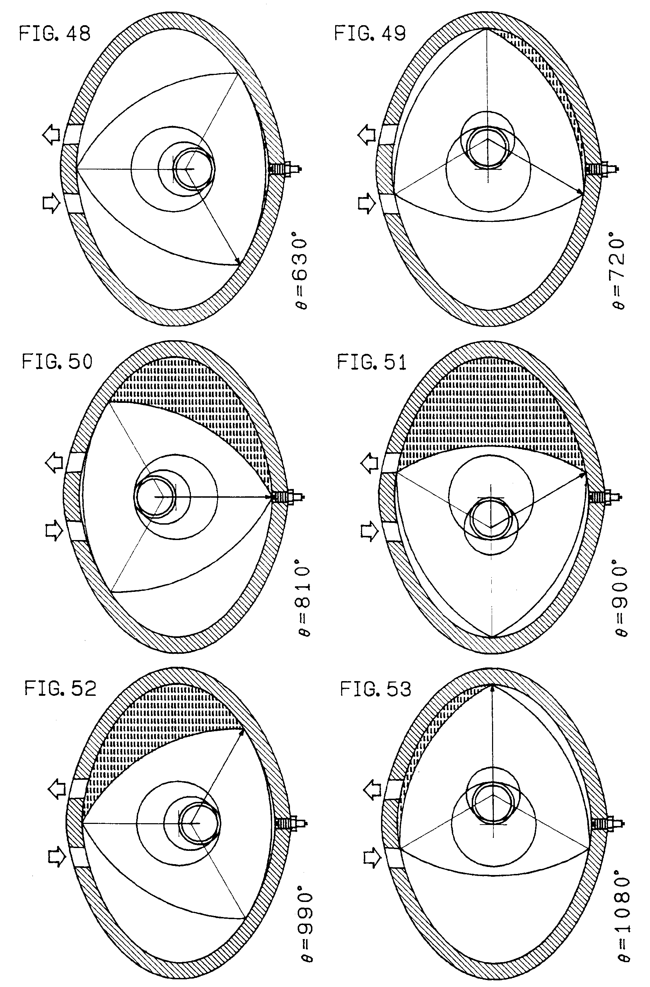

Fig. 48 shows the compression stroke at the T.D.C.

Fig. 49 shows the expansion stroke at 90 after the T.D.C.

Fig. 50 shows the expansion stroke at 180 after the T.D.C.

Fig. 51 shows the expansion stroke at the B.D.C.

Fig. 52 shows the exhaust stroke at 180 before the T.D.C.

Fig. 53 shows the exhaust stroke at 90 before the T.D.C.

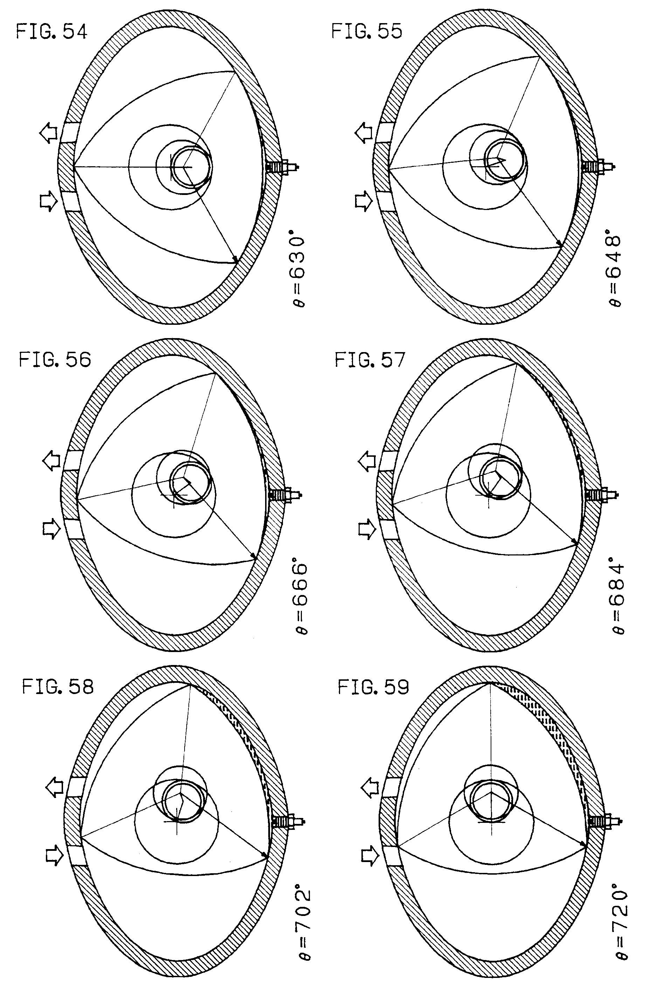

Fig. 54 shows the expansion stroke at the T.D.C.

Fig. 55 shows the expansion stroke at 18 after the T.D.C.

Fig. 56 shows the expansion stroke at 36 after the T.D.C.

Fig. 57 shows the expansion stroke at 54 after the T.D.C.

Fig. 58 shows the expansion stroke at 72 after the T.D.C.

Fig. 59 shows the expansion stroke at 90 after the T.D.C.

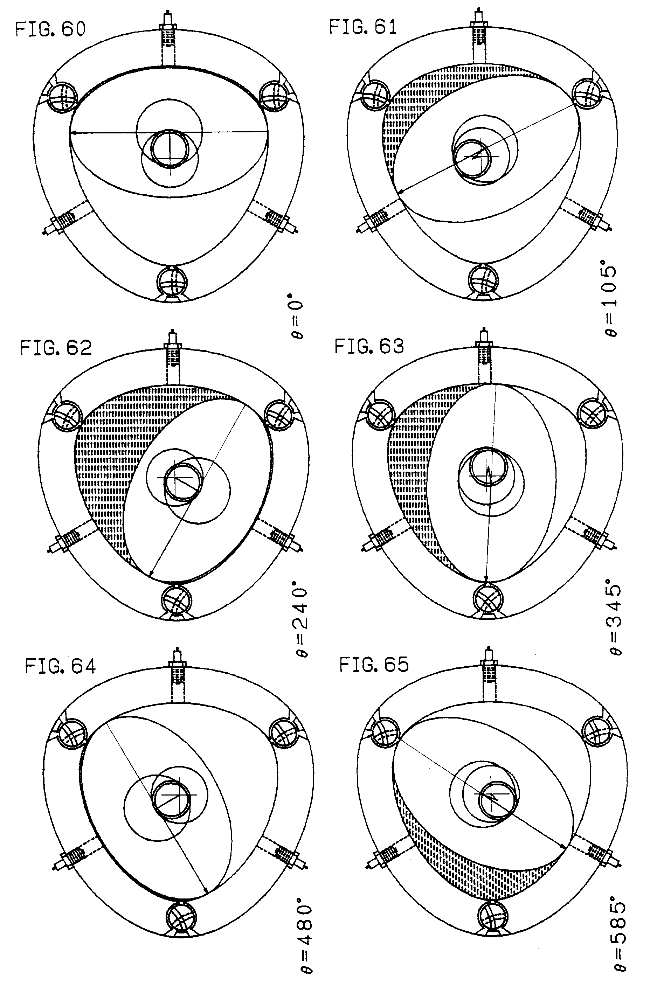

Figs. 60 - 69 show the operating situations of the second embodiment.

Fig. 60 shows the intake stroke at the T.D.C.

Fig. 61 shows the intake stroke at 105 after the T.D.C.

Fig. 62 shows the intake stroke at the B.D.C.

Fig. 63 shows the compression stroke at 105 after the B.D.C.

Fig. 64 shows the compression stroke at the T.D.C.

Fig. 65 shows the expansion stroke at 105 after the T.D.C.

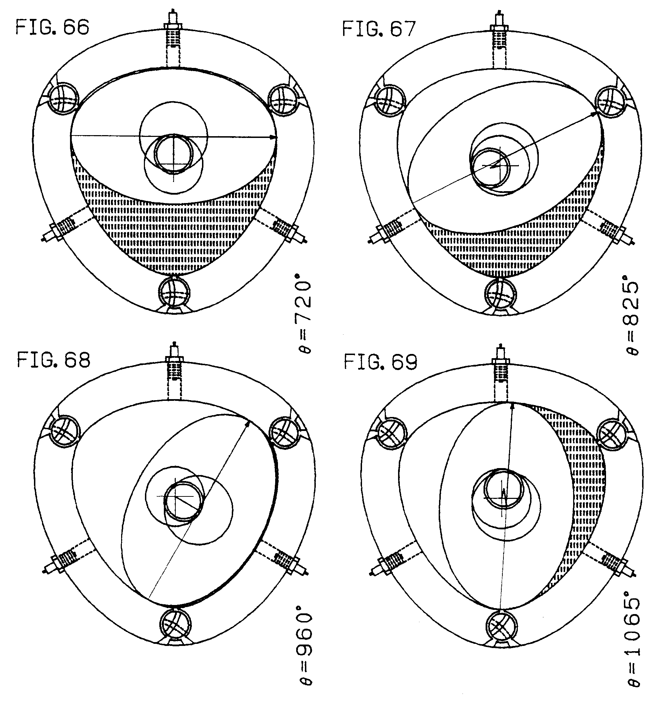

Fig. 66 shows the expansion stroke at the B.D.C.

Fig. 67 shows the exhaust stroke at 105 after the B.D.C.

Fig. 68 shows the exhaust stroke at the T.D.C.

Fig. 69 shows the intake stroke at 105 after the T.D.C.

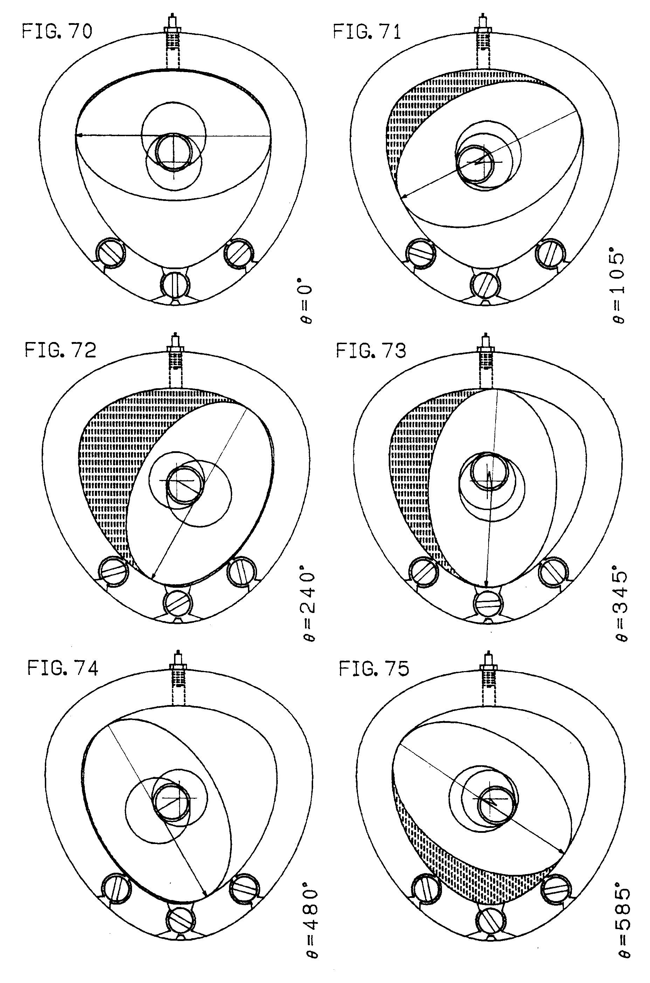

Figs. 70 - 81 show the operating situations of the third embodiment.

Fig. 70 shows the compression stroke at the T.D.C.

Fig. 71 shows the expansion stroke at 105 after the T.D.C.

Fig. 72 shows the expansion stroke at the B.D.C.

Fig. 73 shows the exhaust stroke at 105 after the B.D.C.

Fig. 74 shows the exhaust stroke at the T.D.C.

Fig. 75 shows the scavenging stroke at 105 after the T.D.C.

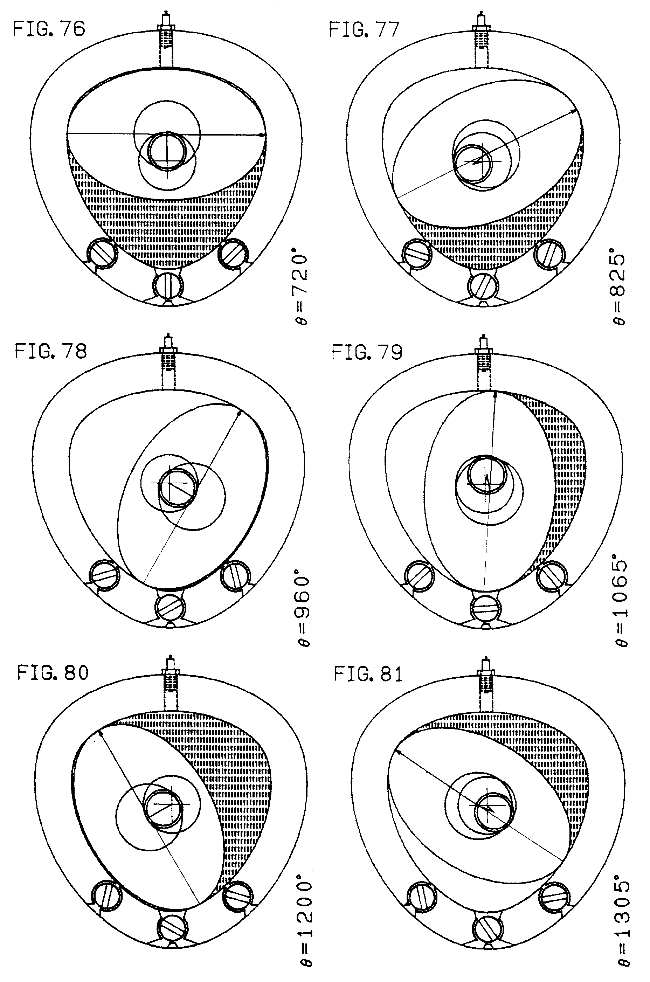

Fig. 76 shows the scavenging stroke at the B.D.C.

Fig. 77 shows the scavenging stroke at 105 after the B.D.C.

Fig. 78 shows the scavenging stroke at the T.D.C.

Fig. 79 shows the intake stroke at 105 after the T.D.C.

Fig. 80 shows the intake stroke at the B.D.C.

Fig. 81 shows the compression stroke at 105 after the B.D.C.

BEST MODE FOR CARRYING OUT THE INVENTION

With the help of working drawings we will now explain concretely the embodiments 1 - 4 of this invention.

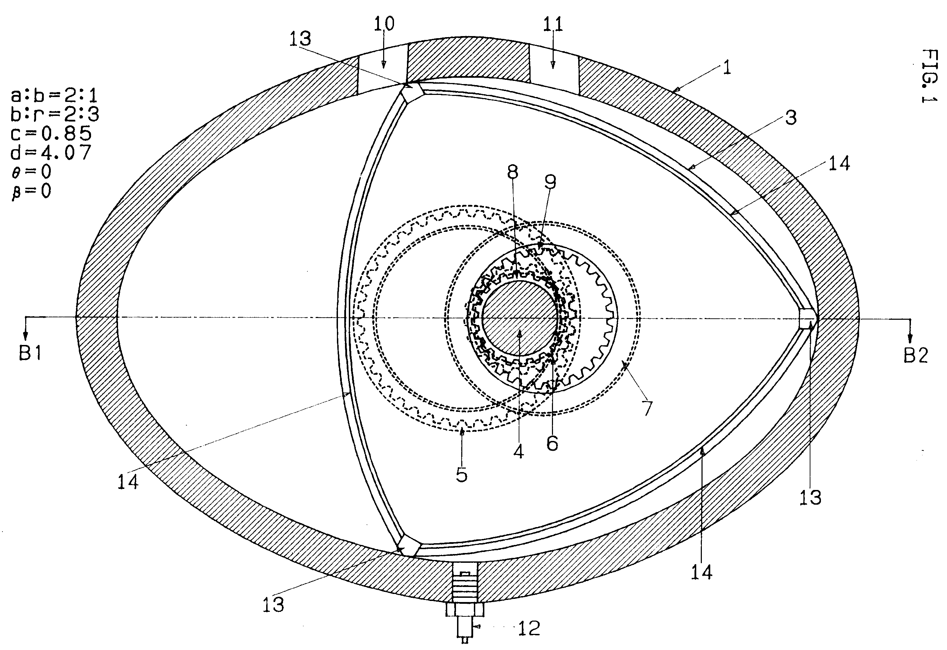

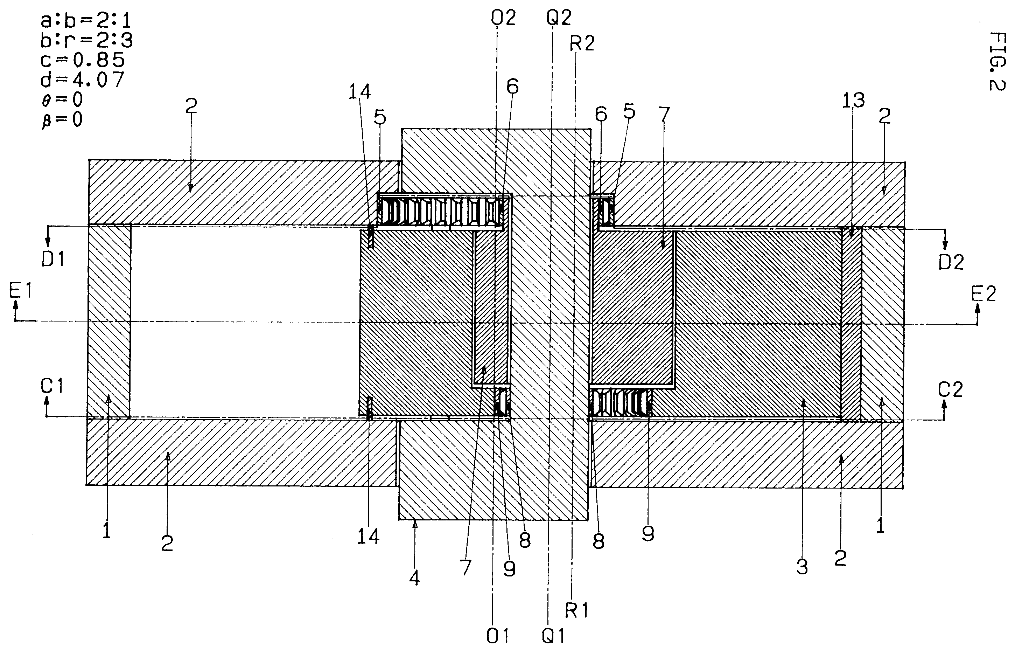

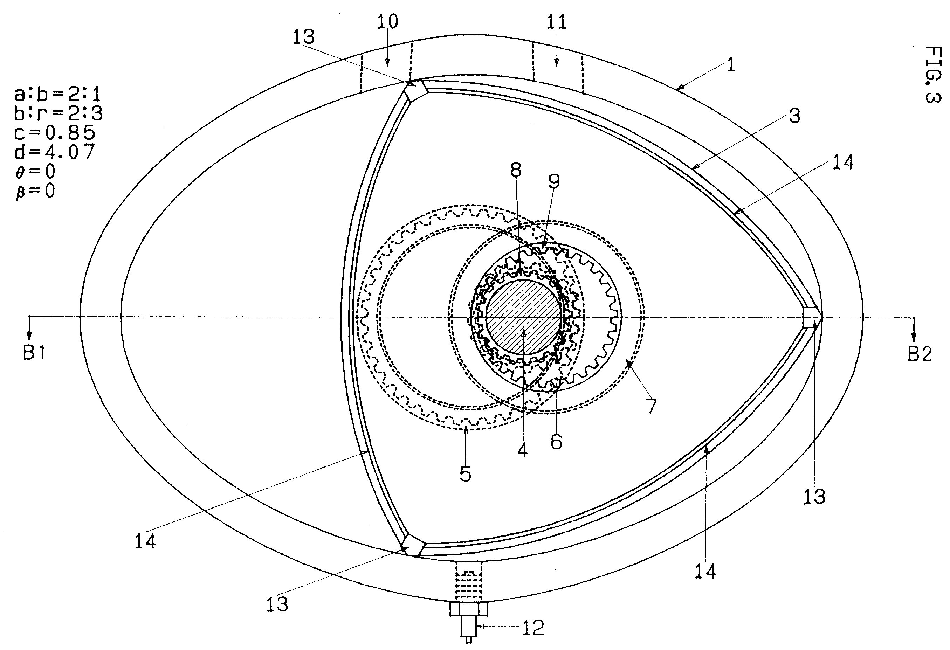

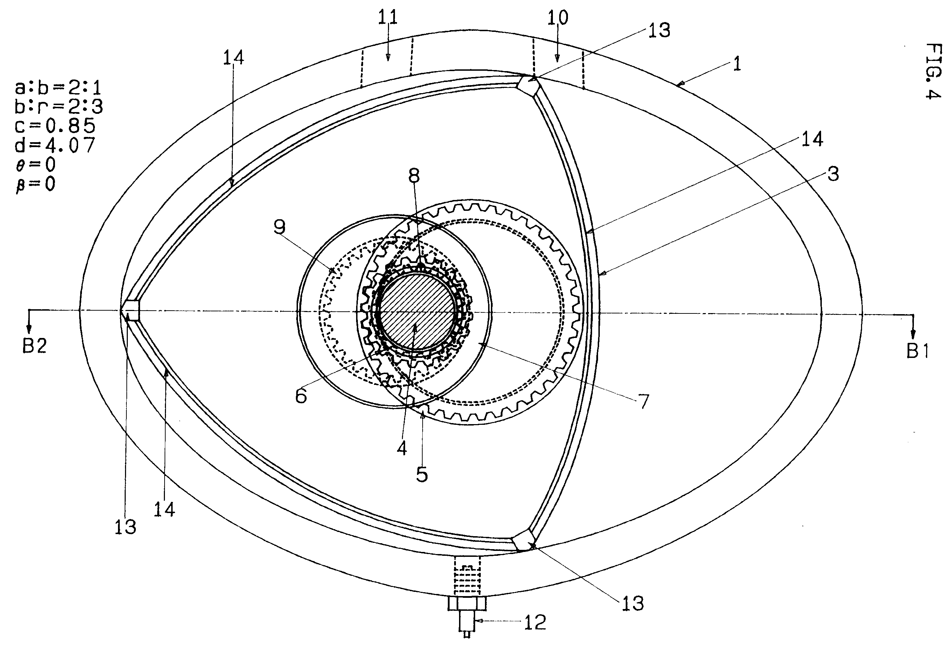

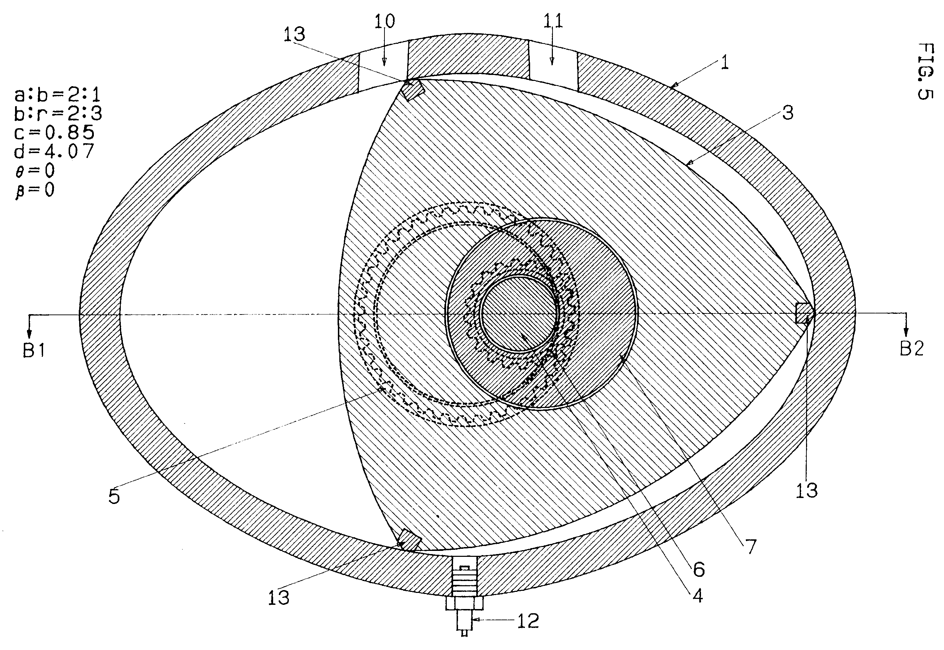

The first embodiment (see Figs. 1 - 5, 9, and 10):

Roughly speaking, the first embodiment is a rotary-piston engine having a structure wherein a housing contains a tubular cavity, wherein the curve determining the contour of the normal section of the tubular cavity is either a composite trochoid or a translated composite trochoid in which the composite trochoid has been parallelly translated outwards a fixed distance, wherein a rotating piston 3 is inserted into the tubular cavity, wherein all the edges of the rotating piston 3 slide continuously on the inside face of the tubular cavity, wherein the lateral faces of the rotating piston 3 and the inside face of the tubular cavity form three working chambers with changing volume, and wherein connecting ducts for gas exchange consist of an intake duct 10 and an exhaust duct 11.

In the composite trochoid the ratio between the radius of the base circle A 25 and the radius of the rolling circle B 26 is 2:1, and the ratio between the radius of the base circle E 27 and the radius of the rolling circle F 28 is 2:3. Therefore the parametric equations of the curve determining the contour of the normal section of the tubular cavity can be expressed

$$x=(a\text{-}b)\cos\theta+c(r\text{-}b)\cos(\text{-}\theta)+dcr\cos(\theta/3+\beta)$$

$$y=(a\text{-}b)\sin\theta+c(r\text{-}b)\sin(\text{-}\theta)+dcr\sin(\theta/3+\beta)$$

For all values of $\beta$ we can make this invented rotary-piston engine, but when $\beta=n\pi/3$ , the conditions for making this invented rotary-piston engine are favourable, provided that $n$ is an arbitrary integer. When $\beta=2n\pi/3$ , the conditions for making this invented rotary-piston engine are the most favourable. In Figs. 15 and 16 the composite trochoides for $\beta=0$ are shown, in Fig. 17 that for $\beta=\pi/3$ .

We see in Figs. 15 and 16 that constrictions appear on the minor axis of the composite trochoid when the value of $d$ decreases. For values of $d$ which do not give constrictions on the minor axis of the composite trochoid, the value of $d$ is dependent on the value of $c$. When $c>1$, the composite trochoid is unsuitable for this invented rotary-piston engine. On the other hand, when the value of $c$ is too small, we get problems with mechanical strength. Thus conditions for making this invented rotary-piston engine are most favourable when $1.0>c>0.6$.

We see from Fig. 15 that for $c=0.8$ conditions are favourable when $d>4.4$, from Fig. 16 we see that for $c=0.9$ conditions are favourable when $d>3.6$. However, since conditions for making this invented rotary-piston engine are disadvantageous for high values of $d$, we should give $d$ low values, within the limits wherein constrictions do not appear on the minor axis of the composite trochoid and wherein the inner envelope of the family of curves of the composite trochoid does not interfere with the base circle A 25 of the composite trochoid.

In the working drawings we let the lateral face of the tubular cavity in the housing be a rotor housing 1 containing a tubular cavity with both ends open and let each of the two bases of the tubular cavity in the housing be a flat side housing 2. Further we insert the rotating piston 3 into the tubular cavity of the rotor housing 1 and attach the side housings 2 to both ends of the tubular cavity of the rotor housing 1.

For the contour of the normal section of the rotating piston 3 we generally use the inner envelope of the family of curves determining the contour of the normal section of the tubular cavity of the rotor housing 1. Because of this, the rotating piston 3 has the shape of a right prism with a quasi-trigonal normal section. Each of the three vertices of the quasi-trigonal normal section of the rotating piston 3 is either the generic point (one of the point P1, the point P2, and the point P3 in Fig. 10) of the composite trochoid, or it has the form of a circular arc whose centre is the generic point of the composite trochoid and whose radius equal to the fixed distance. The angles between each two of the three vertices of the quasi-trigonal normal section and the centre of the quasi-trigonal normal section are all 120 . In Fig. 28 the family of curves of the composite trochoid for $\beta=0$ is shown.

Consequently all the three lateral edges of the rotating piston 3 slide continuously on the lateral face of the tubular cavity of the rotor housing 1, and all the edges of the two bases of the rotating piston 3 slide continuously on the inside face of the side housings 2. The lateral face of the tubular cavity of the rotor housing 1, the inside face of the side housings 2, and the lateral faces of the rotating piston 3 form the three working chambers with changing volume.

To keep the working chambers airtight, apex seals 13 are attached to the three lateral edges of the rotating piston 3, and side seals 14 are attached to the edges of the two bases of the rotating piston 3. The intake duct 10 and the exhaust duct 11 make openings through the rotor housing 1 into the working chamber. Further an ignition plug 12 is installed in the rotor housing 1. Here both the intake duct 10 and the exhaust duct 11 can be installed in the side housing 2.

A crank shaft 4 consists of a crank main shaft and a crank pin and is an output shaft. The axis of rotation of the crank shaft 4 is the axis of the crank main shaft. The crank main shaft is pierced through the side housings 2, in order that the crank main shaft and the tubular cavity should become coaxial. Here the distance between the axis (the origin O) of the crank main shaft and the axis (the point Q) of the crank pin is equal to the eccentric quantity OQ of the hypotrochoid. The function of the crank shaft 4 is equivalent to the function of the eccentric arm OQ of the hypotrochoid.

A fixed gear A 5 is fixed to the side housing 2, in order that the fixed gear A 5 and the tubular cavity should become coaxial. The fixed gear A 5 is coaxial with the crank main shaft and is an internal gear.

A rolling gear B 6 is attached to the crank pin and can rotate on the axis of the crank pin, with the axis of the rolling gear B 6 as the axis of rotation. The rolling gear B 6 is an external gear and is engaged with the fixed gear A 5. The geometric relation between the fixed gear A 5 and the rolling gear B 6 is the same as the relation between the hypotrochoid's fixed circle A 25 and its rolling circle B 26. As the crank shaft 4 revolves, the rolling gear B 6 rotates on the axis of the crank pin at the same time as it revolves around the axis of the crank main shaft.

An eccentric shaft 7 consists of an eccentric main shaft and an eccentric wheel. The eccentric main shaft is attached to the crank pin and can rotate on the axis of the crank pin, with the axis of the eccentric main shaft as the axis of rotation. Further the eccentric main shaft is fixed to the rolling gear B 6, in order that the eccentric main shaft and the rolling gear B 6 should become coaxial. Therefore the axis of the eccentric wheel is the fixed point on the prolongation of the radius of the rolling gear B 6, and it is also the generic point (the point R) of the hypotrochoid.

Here the distance between the axis (the point Q) of the eccentric main shaft and the axis (the point R) of the eccentric wheel is equal to the eccentric quantity QR of the peritrochoid, and it is also equal to the generic radius QR of the hypotrochoid. The function of the eccentric shaft 7 is equivalent to the function of the eccentric arm QR of the peritrochoid, and it is also equivalent to the function of the generic arm QR of the hypotrochoid.

A fixed gear E 8 is fixed to the crank pin, in order that the fixed gear E 8 and the crank pin should become coaxial. The fixed gear E 8 is coaxial with the rolling gear B 6 and is an external gear.

A rolling gear F 9 is attached to the eccentric wheel and can rotate on the axis of the eccentric wheel, with the axis of the rolling gear F 9 as the axis of rotation. The rolling gear F 9 is an internal gear and is engaged with the fixed gear E 8. The geometric relation between the fixed gear E 8 and the rolling gear F 9 is the same as the relation between the peritrochoid's base circle E 27 and its rolling circle F 28.

The rotating piston 3 is fixed to the rolling gear F 9, in order that the rotating piston 3 and the rolling gear F 9 should become coaxial. Accordingly each of the three vertices of the quasi-trigonal normal section of the rotating piston 3 is the fixed point on the prolongation of the radius of the rolling gear F 9, and it is also the generic point (the point P) of the composite trochoid.

Therefore the rotating piston 3 makes a planetary motion on the axis (the point Q) of the crank pin at the same time as it revolves around the axis (the origin O) of the crank main shaft. Because of this, the volume of the working chambers changes, the apex seal 13 opens and closes the intake duct 10 and the exhaust duct 11, and the combustion gas in the working chamber is exchanged. This way we get four strokes: an intake stroke (Figs. 42 - 45), a compression stroke (Figs. 46 - 48), a combustion/expansion stroke (Figs. 49 - 51), and an exhaust stroke (Figs. 52 - 53). The expansion pressure of the combustion gas changes into turning effort from the crank shaft 4. Here the angular velocity of the rotation of the rotating piston 3 is 1/3 of the angular velocity of the rotation of the crank shaft 4, and the direction of rotation of the rotating piston 3 is the same as the direction of rotation of the crank shaft 4.

Figs. 42 - 53 show the operating situations after separate 90 changes in the angle of the crank shaft 4. Fig. 48 shows the operating situation after completion of the compression stroke. In this position we have ignition and combustion. Figs. 54 - 59 show the operating situations in the expansion stroke after separate 18 changes in the angle of the crank shaft 4. From Figs. 54 - 59 we see that near the top dead centre the change in the volume of the working chamber is very slow.

Since in Fig. 10 the centre of gravity of the rotating piston 3 is at the point R, we install a counter weight symmetrically around the point Q, in order to cancel the mass of the rotating piston 3. Further we install a new counter weight symmetrically around the origin O, in order to cancel the sum of the mass of the above counter weight and the mass of the rotating piston 3. This way the moving parts are now in complete balance.

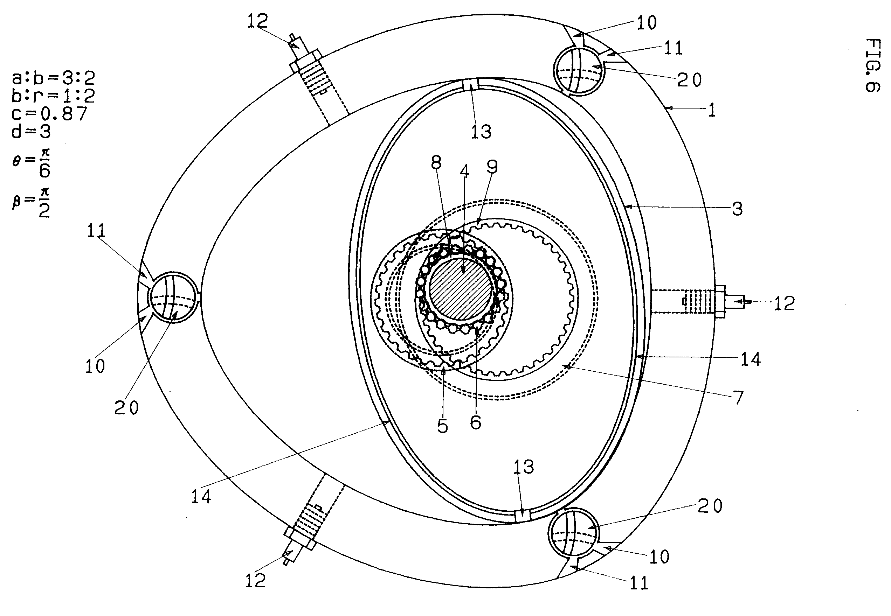

The second embodiment (see Figs. 6, 11, and 12):

The second embodiment is essentially identical with the rotary-piston engine of the first embodiment, except that the curve determining the contour of the normal section of the tubular cavity of the rotor housing 1 is a composite trochoid in which the ratio between the radius of the base circle A 25 and the radius of the rolling circle B 26 is 3:2, and the ratio between the radius of the base circle E 27 and the radius of the rolling circle F 28 is 1:2.

Because of this, the parametric equations of the curve determining the contour of the normal section of the tubular cavity can be expressed

$$x=(a\text{-}b)\cos\theta+c(r\text{-}b)\cos(\text{-}\theta/2)+dcr\cos(\theta/4+\beta)$$

$$y=(a-b)\sin\theta+c(r-b)\sin(-\theta/2)+dcr\sin(\theta/4+\beta)$$

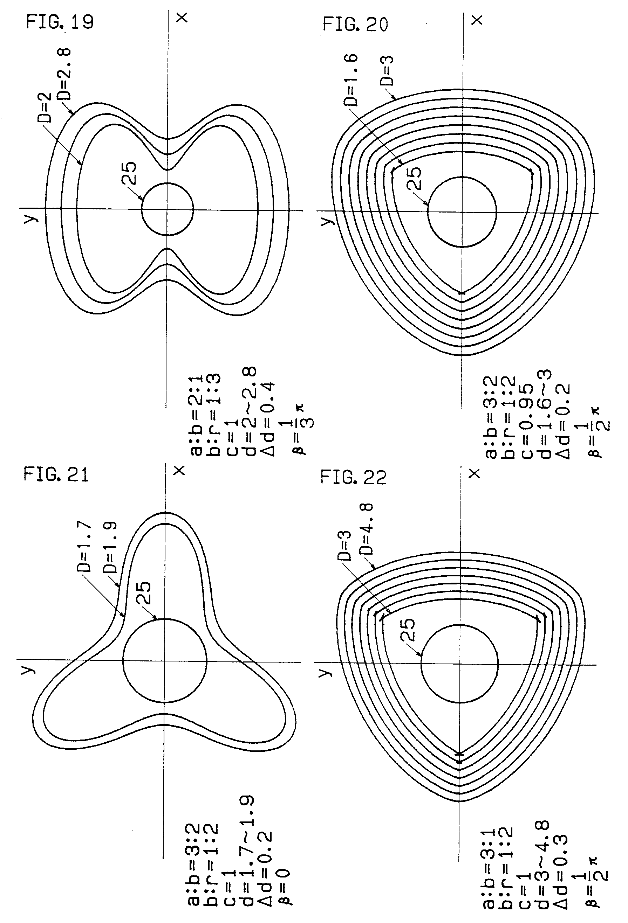

For all values of $\beta$ we can make this invented rotary-piston engine, but when $\beta=n\pi/2$ , the conditions for making this invented rotary-piston engine are favourable, provided that $n$ is an arbitrary integer. When $\beta=(2n+1)\pi/2$ , the conditions for making this invented rotary-piston engine are the most favourable. In Fig. 20 the composite trochoid for $\beta=\pi/2$ is shown, in Fig. 21 the one for $\beta=0$.

We see in Fig. 20 that appendixes appear on the corners of the composite trochoid when the value of $d$ decreases. For values of $d$ which do not give appendixes on the corners of the composite trochoid, the value of $d$ is dependent on the value of $c$. When $c$ is too small, we get problems with mechanical strength. Thus conditions for making this invented rotary-piston engine are most favourable when $1.0>c>0.7$.

We see from Fig. 20 that for $c=0.95$ conditions are favourable when $d>2.1$. However, since conditions for making this invented engine are disadvantageous for high values of $d$, we should give $d$ low values, within the limits wherein appendixes do not appear on the corners of the composite trochoid and wherein the inner envelope of the family of curves of the composite trochoid does not interfere with the base circle A 25 of the composite trochoid.

In the second embodiment the rotating piston 3 has the shape of a right prism with an oval normal section with two vertices, as shown in Fig. 32. Accordingly the lateral face of the tubular cavity of the rotor housing 1, the inside face of the side housings 2, and the lateral faces of the rotating piston 3 form two working chambers with changing volume. Here the angles between the two vertices of the oval normal section and the centre of the oval normal section are both 180 . The angular velocity of the rotation of the rotating piston 3 is 1/4 of the angular velocity of the rotation of the crank shaft 4, and the direction of rotation of the rotating piston 3 is the same as the direction of rotation of the crank shaft 4.

The intake ducts 10 and the exhaust ducts 11 make openings through the rotor housing 1 into the working chambers. A rotary intake/exhaust valve 20 is installed both in the intake duct 10 and in the exhaust duct 11. Here opening and closing of both the intake duct 10 and the exhaust duct 11 is controlled by the rotary intake/exhaust valve 20. Further the rotary intake/exhaust valve 20 is controlled by the rotating motion of the rotating piston 3.

The angular velocity of the rotation of the rotary intake/exhaust valve 20 is 1/8 of the angular velocity of the rotation of the crank shaft 4, and the direction of rotation of the rotary intake/exhaust valve 20 is the opposite of the direction of the rotation of the crank shaft 4. We can also use other types of valves, such as poppet valves, etc., instead of rotary valves.

Except for the above-mentioned differences, the structure of the rotary-piston engine of the second embodiment is identical with the structure of the rotary-piston engine of the first embodiment.

Because the rotating piston 3 makes a planetary motion on the axis of the crank pin at the same time as it revolves around the axis of the crank main shaft, the volume of the working chambers changes. Further the rotary intake/exhaust valves 20 open and close both the intake ducts 10 and the exhaust ducts 11. Because of this, the combustion gas in the working chamber is exchanged. This way we get four strokes: an intake stroke (Figs. 60 - 62), a compression stroke (Figs. 63 - 64), a combustion/expansion stroke (Figs. 65 - 66), and an exhaust stroke (Figs. 67 - 68). The expansion pressure of the combustion gas changes into turning effort from the crank shaft 4. Figs. 60 - 69 show the operating situations after separate 105 changes in the angle of the crank shaft 4. Fig. 64 shows the operating situation after completion of the compression stroke. In this position we have ignition and combustion.

When we use the same techniques as in the first embodiment, the moving parts are in complete balance.

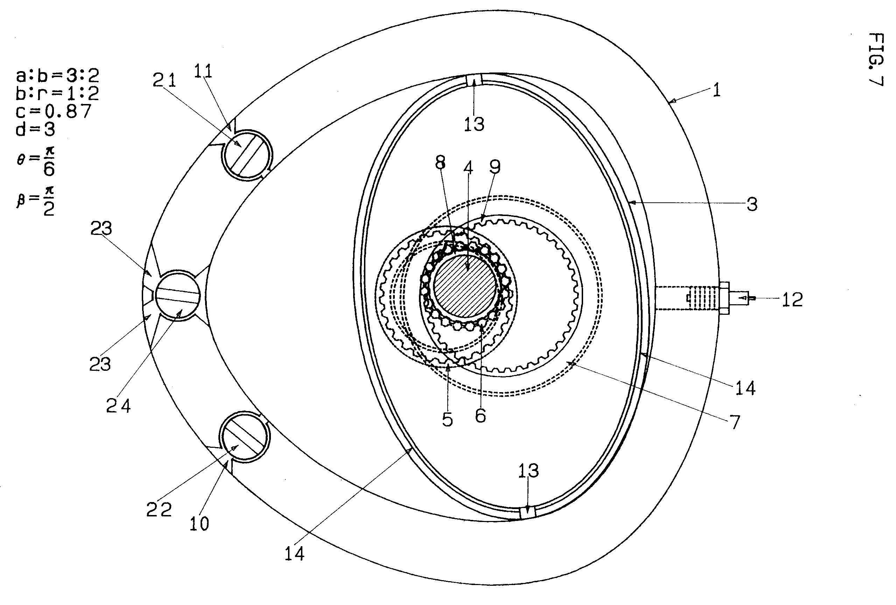

The third embodiment (see Fig. 7):

The third embodiment is essentially identical with the rotary-piston engine of the second embodiment, except that scavenging ducts 23 are opened through the rotor housing 1 into the working chamber.

The intake duct 10, the exhaust duct 11, and the scavenging ducts 23 make openings through the rotor housing 1 into the working chambers. A rotary intake valve 22 is installed in the intake duct 10, a rotary exhaust valve 21 in the exhaust duct 11, and a rotary scavenging valve 24 in the scavenging duct 23. Here opening and closing of the intake duct 10 is controlled by the rotary intake valve 22, opening and closing of the exhaust duct 11 by the rotary exhaust valve 21, and opening and closing of the scavenging duct 23 by the rotary scavenging valve 24. The rotary intake valve 22, the rotary exhaust valve 21, and the rotary scavenging valve 24 are controlled by the rotating motion of the rotating piston 3.

The angular velocity of the rotation of the rotary scavenging valve 24 is 1/4 of the angular velocity of the rotation of the crank shaft 4, and the direction of rotation of the rotary scavenging valve 24 is the opposite of the direction of rotation of the crank shaft 4. The angular velocity of the rotation of both the rotary intake valve 22 and the rotary exhaust valve 21 is 1/4 of the angular velocity of the rotation of the crank shaft 4, and the direction of rotation of both the rotary intake valve 22 and the rotary exhaust 21 valve is the same as the direction of rotation of the crank shaft 4.

Except for the above-mentioned differences, the structure of the rotary-piston engine of the third embodiment is identical with the structure of the rotary-piston engine of the second embodiment.

Because the rotating piston 3 makes a planetary motion on the axis of the crank pin at the same time as it revolves around the axis of the crank main shaft, the volume of the working chambers changes. The rotary intake valve 22 opens and closes the intake duct 10, the rotary exhaust valve 21 opens and closes the exhaust duct 11, and the rotary scavenging valve 24 opens and closes the scavenging ducts 23. Because of this, the combustion gas in the working chamber is exchanged. This way we get five strokes: a combustion/expansion stroke (Figs. 71 - 72), an exhaust stroke (Figs. 73 - 74), a scavenging stroke (Figs. 75 - 78), an intake stroke (Figs. 79 - 80), and a compression stroke (Figs. 81 and 70). The expansion pressure of the combustion gas changes into turning effort from the crank shaft 4. Figs. 70 - 81 show the operating situations after separate 105 changes in the angle of the crank shaft 4. Fig. 70 shows the operating situation after completion of the compression stroke. In this position we have ignition and combustion.

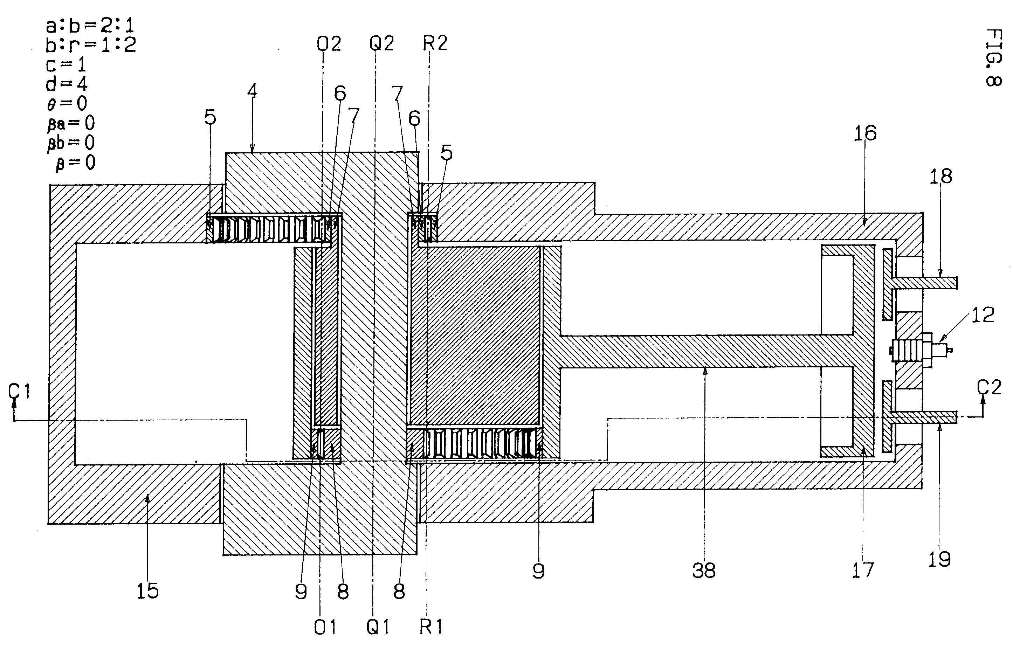

The fourth embodiment (see Figs. 8, 13, 14):

The fourth embodiment is a reciprocating engine using a crank mechanism which exploits the reciprocating motion generated by the generic point of a composite trochoid, instead of the crank mechanism of the reciprocating engines in use to-day.

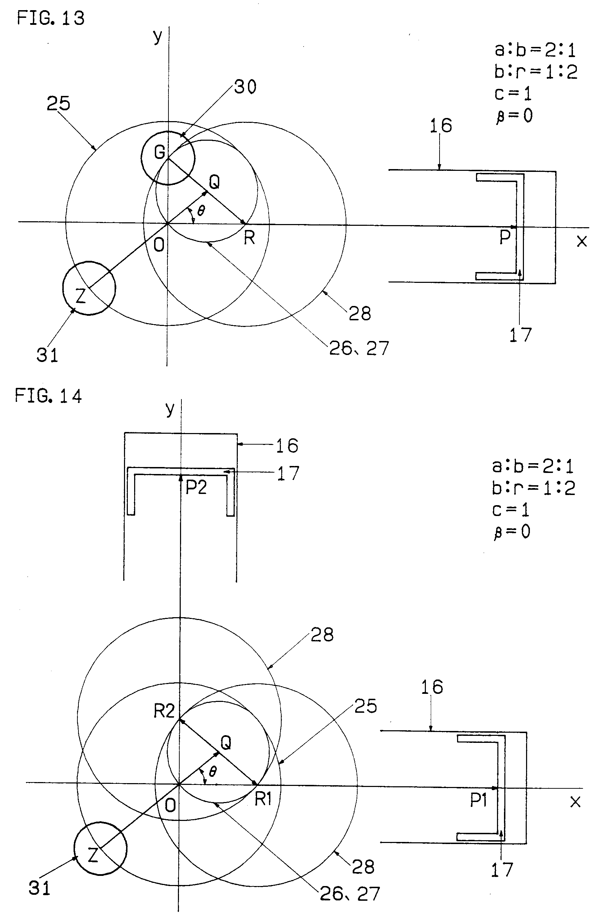

As seen in Fig. 8, we make a reciprocating type working chamber by installing a reciprocating piston 17 on the generic point of a composite trochoid and by putting a cylinder 16 together with it. Further we install a crank case 15 and install a poppet type intake valve 18, a poppet type exhaust valve 19, and an ignition plug 12 in the top of the cylinder 16. This structure is identical with that of the reciprocating engines in use to-day except its crank mechanism, and its operating situations are identical with those of the reciprocating engines in use to-day. In Fig. 8, the counter weights of Fig. 13 are omitted.

The structure of the crank mechanism of this invented reciprocating engine is essentially identical with the structure consisting of the rotating piston 3, the eccentric shaft 7, the crank shaft 4, and the two gear units in the first embodiment, except that the ratio between the radius of the pitch circle of the fixed gear A 5 and the radius of the pitch circle of the rolling gear B 6 is 2:1, and except that the ratio between the radius of the pitch circle of the fixed gear E 8 and the radius of the pitch circle of the rolling gear F 9 is 1:2.

In the above composite trochoid the ratio between the radius of the base circle A 25 and the radius of the rolling circle B 26 is 2:1, and the ratio between the radius of the base circle E 27 and the radius of the rolling circle F 28 is 1:2. Here we let $c=1$, $\beta a=0$, and $\beta=\beta b/2$ , then the coordinates of the generic point of the composite trochoid can be expressed as below using equations (3) and (4).

$$x=b\cos\theta+b\cos(-\theta+\beta b)+dr\cos(\beta b/2)$$

$$y=b\sin\theta+b\sin(-\theta+\beta b)+dr\sin(\beta b/2)$$

Here

$$\cos A+\cos B=2\cos\{(A+B)/2\}\cos\{(A-B)/2\}$$

$$\sin A+\sin B=2\sin\{(A+B)/2\}\cos\{(A-B)/2\}$$

Therefore the above equations become

$$x=2b\cos(\beta b/2)\cos\{(2\theta-\beta b)/2\}+dr\cos(\beta b/2)$$

$$y=2b\sin(\beta b/2)\cos\{(2\theta-\beta b)/2\}+dr\sin(\beta b/2)$$

$$\therefore\ x=\cos(\beta b/2)\{2b\cos(\theta-\beta b/2)+dr\} \tag{9}$$

$$y=\sin(\beta b/2)\{2b\cos(\theta-\beta b/2)+dr\} \tag{10}$$

We let the tilt of the composite trochoid be $\beta d$. Then

$$\tan\beta d=y/x$$
$$=\tan\beta b/2$$

Accordingly the tilt $\beta d$ of the composite trochoid becomes $\beta b/2$. Therefore the generic point of the composite trochoid generates a reciprocating motion, the prolongation of the composite trochoid passes through the origin O, the angle formed by the prolongation of the composite trochoid and the $x$-axis becomes $\beta b/2$, and the displacement of the composite trochoid becomes a cosine function with the amplitude $2b$ and the variable $\theta$.

Consequently, when the generic point of the composite trochoid generates the reciprocating motion, the point Q (the axis of the crank pin) revolves around the origin O (the axis of the crank main shaft). Because of this, we can use the reciprocating motion generated by the generic point of the composite trochoid for the crank mechanism of the reciprocating engines in use to-day.

When we make this invented reciprocating type working chamber by installing the reciprocating piston 17 on the generic point P of the composite trochoid and by putting the cylinder 16 together with it, as shown in Fig. 13, therefore the reciprocating piston 17 makes the reciprocating motion in the cylinder 16. This displacement of the working chamber becomes a cosine function with the stroke amplitude $2a$ and the crank angle $\theta$. Here $dr$ becomes the length of the connecting rod of the reciprocating engines in use to-day.

According to Fig. 13, let the mass of the reciprocating piston 17 be $M1$ and its particle be the generic point P. Let the mass of a counter weight M2 30 be $M2$ and its particle be the point G. Let the mass of a counter weight M3 31 be $M3$ and its particle be the point Z. The point G and the point R are symmetric around the point Q. The point Z is on the circumference of the base circle A 25, and the phase angle between point Z and point Q is $\pi$.

Here we let the angular velocity of the point Q be $\alpha$ and the time be $t$. Then $\theta=\alpha t$ . Since $\beta b=0$, the coordinates of the particle of the reciprocating piston 17 can be expressed as below using equations (9) and (10).

$$x1=2b\cos\alpha t+dr$$

$$y1=0$$

Since $dr=0$ and $\beta b=\pi$ , the coordinates of the particle of the counter weight M2 30 can be expressed as below using equations (9) and (10).

$$x2=0$$

$$y2=2b\sin\alpha t$$

The coordinates of the particle of the counter weight M3 31 can be expressed $x3=-a\cos\alpha t$ $y3=-a\sin\alpha t$

The total sum $Ix$ of the inertia forces of the moving parts on the $x$-axis can be expressed

$$Ix=-M1\mathrm{d}(\mathrm{d}x1/\mathrm{d}t)/\mathrm{d}t-M2\mathrm{d}(\mathrm{d}x2/\mathrm{d}t)/\mathrm{d}t-M3\mathrm{d}(\mathrm{d}x3/\mathrm{d}t)/\mathrm{d}t$$
$$=(2bM1-aM3)\alpha\alpha\cos\alpha t$$

The total sum $Iy$ of the inertia forces of the moving parts on the $y$-axis can be expressed

$$Iy=-M1\mathrm{d}(\mathrm{d}y1/\mathrm{d}t)/\mathrm{d}t-M2\mathrm{d}(\mathrm{d}y2/\mathrm{d}t)/\mathrm{d}t-M3\mathrm{d}(\mathrm{d}y3/\mathrm{d}t)/\mathrm{d}t$$
$$=(2bM1-aM3)\alpha\alpha\sin\alpha t$$

To get complete balance of the moving parts, the total sum $Ix$ must be equal to 0, and the total sum $Iy$ must be equal to 0. Thus we get

$$bM1=bM2$$

$$aM3=b(M1+M2)$$

Assuming that the reciprocating piston 17 is installed at the point R, we here install the counter weight M2 30 at the point G, in order to cancel the mass $M1$ of the reciprocating piston 17. Further We install the counter weight M3 31 at the point Z, in order to cancel the sum of the mass $M2$ of the counter weight M2 30 and the mass $M1$ of the reciprocating piston 17. Then the total sum of the inertia forces of the moving parts becomes 0. Thus complete balance of the moving parts is possible.

In these installations the point G and the point R need not be symmetric around the point Q, the point Z need not be on the circumference of the base circle A 25, and the phase angle between the point Z and the point Q need not be $\pi$.

As seen in Fig. 14, we install a reciprocating piston 17 having the mass $M1$ at the generic point P2. Since $\beta b=\pi$ , the coordinates of the particle of this reciprocating piston 17 can be expressed as below using equations (9) and (10).

$$x2=0$$

$$y2 = 2b\sin\alpha t + dr$$

The total sum $Ix$ can be expressed

$$Ix = -M1\mathrm{d}(\mathrm{d}x1/\mathrm{d}t)/\mathrm{d}t - M1\mathrm{d}(\mathrm{d}x2/\mathrm{d}t)/\mathrm{d}t - M3\mathrm{d}(\mathrm{d}x3/\mathrm{d}t)/\mathrm{d}t$$
$$= (2bM1 - aM3)\alpha\alpha\cos\alpha t$$

The total sum $Iy$ can be expressed

$$Iy = -M1\mathrm{d}(\mathrm{d}y1/\mathrm{d}t)/\mathrm{d}t - M1\mathrm{d}(\mathrm{d}y2/\mathrm{d}t)/\mathrm{d}t - M3\mathrm{d}(\mathrm{d}y3/\mathrm{d}t)/\mathrm{d}t$$
$$= (2bM1 - aM3)\alpha\alpha\sin\alpha t$$

To get complete balance of the moving parts, the total sum $Ix$ must be equal to 0, and the total sum $Iy$ must be equal to 0. Thus we get

$$2bM1 = aM3$$

Assuming that the two reciprocating pistons 17 are installed at the point Q, we here install the counter weight M3 31 at the point Z, in order to cancel the sum of the mass of the two reciprocating pistons 17. Then the total sum of the inertia forces of the moving parts becomes 0. Thus complete balance of the moving parts is possible.

Consequently a reciprocating motion is changed to a simple rotating motion. Because of this, the inertia forces of the reciprocating motion become 0, and the impediment from the reciprocating masses becomes 0.

Because of this, although the engine of the fourth embodiment has the form of a reciprocating engine, it is, mechanically speaking, essentially a rotary-piston engine.

Since the counter weight M3 31 is exchanged for two reciprocating pistons, we can now make a 90 V type 4-cylinder reciprocating engine or a star-shaped 4-cylinder reciprocating engine.

The above mentioned embodiments are meant for illustration only and are not intended as definitions of the limits of this invention. Further this application also includes slightly altered structures which do not differ from the principle of this invention. We will now show an example.

In the above-mentioned embodiments we used the mechanism consisting of the two gear units, the crank shaft 4, the eccentric shaft 7, and the rotating piston 3 in order to obtain the locus determined by equations (1) and (2). Here one of the two gear units consists of the fixed gear A 5 and the rolling gear B 6, and the other of the two gear units consists of the fixed gear E 8 and the rolling gear F 9.

However, in order to obtain the locus determined by equations (1) and (2), we can use a gear unit consisting of a fixed gear, a rolling gear, and at least one idle gear, instead of one of the above gear units.

For instance, since $\lambda = -a\theta/b$, the direction of rotation of the rolling gear B 6 is the opposite of the direction of rotation of the crank shaft 4, and the angular velocity of the rotation of the rolling gear B 6 is $a/b$ of the angular velocity of the rotation of the crank shaft 4. Then we can do as follows (not shown):

(a) To the crank shaft 4 we fix the axis of rotation of a stacked idle gear, whose upper gear and lower gear both are external gears. We let both the fixed gear A 5 and the rolling gear B 6 be external gears. We can now make a gear unit consisting of this stacked idle gear, this fixed gear A 5, and this rolling gear B 6.

(b) To the crank shaft 4 we fix the axis of rotation of a stacked idle gear, whose upper gear and lower gear both are external gears. We let both the fixed gear A 5 and the rolling gear B 6 be internal gears. We can now make a gear unit consisting of this stacked idle gear, this fixed gear A 5, and this rolling gear B 6.

(c) To the crank shaft 4 we fix the axes of rotation of even numbered idle gears, whose gears are external gears. We can now make a gear unit consisting of this even numbered idle gears, the fixed gear A 5, and the rolling gear B 6.

We can also use one of these gear units instead of the gear unit consisting of the fixed gear E 8 and the rolling gear F 9. In this case, since $\tau = -e\lambda/f$, we shall use one of these gear units, in order that the direction of rotation of the rolling gear F 9 should be the opposite of the direction of rotation of the eccentric shaft 7, and that the angular velocity of the rotation of the rolling gear F 9 should be $e/f$ of the angular velocity of the rotation of the eccentric shaft 7. Further we must fix the axes of rotation of these idle gears to the eccentric shaft 7.

In other words, we can use a quasi-composite trochoid illustrated with Fig. 85 as the contour of the normal section of the tubular cavity in the housing.

Explanation of reference characters:

1: Rotor housing 2: Side housing 3: Rotating piston 4: Crank shaft 5: Fixed gear A 6: Rolling gear B 7: Eccentric shaft 8: Fixed gear E 9: Rolling gear F 10: Intake duct 11: Exhaust duct 12: Ignition plug 13: Apex seal 14: Side seal 15: Crank case 16: Cylinder 17: Reciprocating piston 18: Poppet type intake valve 19: Poppet type exhaust valve 20: Rotary intake/exhaust valve 21: Rotary exhaust valve 22: Rotary intake valve 23: Scavenging duct 24: Rotary scavenging valve 25: Base circle A 26: Rolling circle B 27: Base circle E 28: Rolling circle F 29: Locus of the point P 30: Counter weight M2 31: Counter weight M3 32: Circle F 33: Circle E 34: Circle B 35: Circle A 36: Concentric idle circle 37: Idle circle

Effects of the invention:

This invented engine has the following effects:

About the rotary-piston engine characterized by the composite trochoid in which the ratio between the radius of the hypotrochoid's base circle and the radius of its rolling circle is 2:1, and the ratio between the radius of the peritrochoid's base circle and the radius of its rolling circle is 2:3:

(a) There are no reciprocating parts, and the only moving parts are the rotating parts. Accordingly complete balance of the moving parts is possible.

(b) Because this invented rotary-piston engine has no constrictions on the minor axis of the contour of the normal section of the tubular cavity in the housing, the movement of the combustion gas is not impeded near the top dead centre.

(c) We can obtain a high compression ratio compared to the Wankel type rotary-piston engine.

(d) Because the displacement of the working chamber changes slowly near the top dead centre, the combustion is completed before the beginning of the expansion. Therefore the conditions for thermal efficiency, "the expansion should be as big as possible" and "the pressure before the beginning of the expansion should be as big as possible", are fulfilled, and we can expect a high thermal efficiency.

(e) In the automobile Diesel engines in use to-day, because a great amount of fuel is injected in one instant into the working chamber during a very short combustion stroke, and because the time for combustion is very short, combustion continues even after entering the expansion stroke. Thus the expansion ratio decreases substantially. Therefore thermal efficiency decreases. Further the chance for a reaction between the fuel and the oxygen is also low. Consequently measures to prevent black smoke will be insufficient.

Contrary to this, because the displacement of the working chamber changes slowly near the top dead centre in this invented rotary-piston engine, we can secure enough time for combustion. Because the shape of the working chamber is flat, and because the flat working chamber moves with almost unchanged displacement along the inside face of the rotor housing, in relation to the working chamber the fuel injection valve moves along the wall of the working chamber. As we use a fuel injection valve with high atomization and high distribution, we can inject sequences of small amounts of fuel, from the end to the other end of the working chamber. In this way we can spread the highly atomized fuel all over the working chamber. Thus the chance for a reaction between the fuel and the oxygen increases, and we can expect that the combustion is completed before the beginning of the expansion. Consequently we can expect a high thermal efficiency, and conditions for preventing black smoke are good. There is no need for great efforts to make penetration and atomization compatible.

(f) Since the displacement of the working chamber changes slowly near the top dead centre, there is enough time for combustion. Because of this, we can call this operating situation the combustion stroke. Further, since the displacement of the working chamber changes slowly from the end of the exhaust stroke to the beginning of the intake stroke, we can call this operating situation the scavenging stroke. Consequently we can make a six-stroke cycle rotary-piston engine having an intake stroke, a compression stroke, a combustion stroke, an expansion stroke, an exhaust stroke, and a scavenging stroke.

About the rotary-piston engine characterized by the composite trochoid in which the ratio between the radius of the hypotrochoid's base circle and the radius of its rolling circle is 3:2, and the ratio between the radius of the peritrochoid's base circle and the radius of its rolling circle is 1:2:

There are no reciprocating parts and the only moving parts are the rotating parts. Accordingly complete balance of the moving parts is possible.

About the reciprocating engine characterized by installing a reciprocating piston on the generic point of a composite trochoid, by putting a cylinder together with the reciprocating piston, and by using a crank mechanism which exploits the reciprocating motion generated by the generic point of the composite trochoid:

Complete balance of the moving parts is possible, and the impediment from the reciprocating masses disappears. Since piston slap does not occur, we need no cross-head. Since the reciprocating piston is independent, the side thrust from the weight of the reciprocating piston disappears. This way for a huge ship engine we can use a V-type reciprocating engine. As a result, the ship engine becomes smaller, and the centre of gravity of the ship becomes lower.

**Claims**

1. A planetary-motion rotary-piston engine, comprising

a housing (1) containing a tubular cavity shaped as a right noncircular cylinder having an axis ($O_1$-$O_2$) the tubular cavity being bounded at each end by two side housings (2) geometrically corresponding to two bases of the right noncircular cylinder,
a crankshaft (4) having a main shaft and pierced through the side housings (2) of the tubular cavity along said axis ($O_1$-$O_2$),
an eccentric shaft (7) having a main shaft and coaxially attached to a crank pin of said crankshaft (4),
a rotating piston (3) rotatably attached to the eccentric shaft (7), the rotating piston (3) being shaped as a right prism having two bases sliding continuously on the side housings (2) of the tubular cavity,
a first gear unit and a second gear unit arranged to transfer rotational motion of the rotating piston (3) into rotational motion of the crankshaft (4), the first gear unit comprising a first fixed gear (5) coaxially fixed to one of the side housings (2) of the tubular cavity and a first rolling gear (6) coaxially fixed to the main shaft of the eccentric shaft (7), the first fixed gear (5) and the first rolling gear (6) engaging each other, the second gear unit comprising a second fixed gear (8) coaxially fixed to the crank pin and a second rolling gear (9) coaxially fixed to the rotating piston (3), the second fixed gear (8) and the second rolling gear (9) engaging each other, and
connecting ducts (10,11) for gas exchange whose opening and closing are controlled by the rotating piston (3),
**characterised in** that

- the contour of the normal section of the tubular cavity is defined by an outer envelope of a family of curves determining the contour of the normal section of the rotating piston (3),
- the contour of the normal section of the rotating piston (3) is defined by a composite trochoid composed of a hypotrochoid and a peritrochoid, the generic point ($v,w$) of the composite trochoid being defined by a first pair of parametric equations:

$$v = -c(r-b)\cos \omega - (a-b)\cos(1-r)\omega - ha\cos\{(1-r/b+r/a)\omega+\beta c\} \text{ and}$$

$$w = -c(r-b)\sin \omega - (a-b)\sin(1-r/b)\omega - ha\sin\{(1-r/b+r/a)\omega+\beta c\},$$

where

$c(r-b)$ is equal to the length of the eccentric arm of the hypotrochoid,
$(a-b)$ is equal to the length of the generic arm of the hypotrochoid and to the length of the eccentric arm of the peritrochoid,
$ha$ is equal to the length of the generic arm of the peritrochoid,
$\omega$ is the angular velocity of the eccentric arm of the hypotrochoid,
$(1-r/b)\omega$ is the angular velocity of the generic arm of the hypotrochoid and also the angular velocity of the eccentric arm of the peritrochoid,
$(1-r/b+r/a)\omega$ is the angular velocity of the generic arm of the peritrochoid, and
$\beta c$ is equal to the phase angle of the generic arm of the peritrochoid,

- the hypotrochoid is generated by a base circle (32) with radius $cr$ and a rolling circle (33) with radius $cb$,
- the peritrochoid is generated by a base circle (34) with radius $b$ and a rolling circle (35) with radius a,
- said family of curves is defined by a second pair of parametric equations:

$$x = (a-b)\cos\theta + c(r-b)\cos(1-a/b)\theta + v\cos\{(1-a/b+a/r)\theta+\beta\} - w\sin\{(1-a/b+a/r)\theta+\beta\} \text{ and}$$

$$y = (a-b)\sin\theta + c(r-b)\sin(1-a/b)\theta + v\sin\{(1-a/b+a/r)\theta+\beta\} + w\cos\{(1-a/b+a/r)\theta+\beta\},$$

where

(a-b) is equal to the distance between the axis of said main shaft of the crankshaft (4) and the axis of the crank pin of the crankshaft (4),

c(r-b) is equal to the distance between the axis of said main shaft of the eccentric shaft (7) and an axis of an eccentric wheel on the eccentric shaft (7),

θ is the angular velocity of the crankshaft (4),

(1-a/b)θ is the angular velocity of the eccentric shaft (7),

(1-a/b+a/r)θ is the angular velocity of the rotating piston (3), and

β is equal to the phase angle of the rotating piston (3) and to the phase angle of the composite trochoid,

- said family of curves has geometrically a structure of a further composite trochoid composed of a further hypotrochoid and a further peritrochoid,
- said further hypotrochoid is generated by a base circle (25) with radius a and a rolling circle (26) with radius b,
- said further peritrochoid is generated by a base circle (27) with radius cb and a rolling circle (28) with radius cr, the length of the eccentric arm of said further hypotrochoid being equal to a-b, both lengths of the generic arm of said further hypotrochoid and the eccentric arm of said further peritrochoid being equal to c(r-b),
- the rotating piston (3) is geometrically fixed to the rolling circle (28) of said further peritrochoid, the angular velocity of the rotating piston (3) being (1-a/b+a/r)θ, and the phase angle of the rotating piston (3) being equal to β,
- the crankshaft (4) moves as the eccentric arm of said further hypotrochoid, the angular velocity of the crankshaft (4) being θ, and the distance between the axis of said main shaft of the crankshaft (4) and the axis of the crank pin of the crankshaft (4) being equal to a-b,
- the eccentric shaft (7) moves as the generic arm of said further hypotrochoid and as the eccentric arm of said further peritrochoid, the angular velocity of the eccentric shaft (7) being (1-a/b)θ, and the distance between the axis of said main shaft of the eccentric shaft (7) and the axis of the eccentric wheel on the eccentric shaft (7) being equal to c(r-b),
- the first fixed gear (5) is coaxial with said main shaft of the crankshaft (4) and moves as the base circle (25) of said further hypotrochoid,
- the first rolling gear (6) moves as the rolling circle (26) of said further hypotrochoid,
- the second fixed gear (8) moves as the base circle (27) of said further peritrochoid, and
- the second rolling gear (9) moves as the rolling circle (28) of said further peritrochoid.

2. A planetary-motion rotary-piston engine according to claim 1, wherein the normal section of the rotating piston (3) has a contour having at least two vertices, each of which is shaped as a circular arc whose centre constitutes a generic point of said further composite trochoid conditioned by w=0 and v=dcr and being an end point of the generic arm of said further peritrochoid, dcr being equal to the length of the generic arm of said further peritrochoid and corresponding geometrically to the distance between the axis of the rotating piston (3) and the centre of one of the circular-arc-shaped vertices of the contour of the normal section of the rotating piston (3), and

the contour of the normal section of the tubular cavity is defined by an outer envelope of a family of curves determining the circular-arc-shaped vertices of the contour of the normal section of the rotating piston (3).

3. A planetary-motion rotary-piston engine according to claim 1, wherein the contour of the normal section of the tubular cavity is defined by a translated composite trochoid, in which said further composite trochoid conditioned by w=0 and v=dcr has been parallelly translated outwards a fixed distance t along a normal line to said further composite trochoid conditioned by w=0 and v=dcr, t≥o, an inner envelope and an outer envelope of a family of curves of said further composite trochoid conditioned by w=0 and v=dcr having at least two points of osculation, and

the normal section of the rotating piston (3) has a contour having at least two vertices, each of which is shaped as a circular arc whose radius is equal to said fixed distance t and whose centre constitutes the generic point of said further composite trochoid conditioned by w=0 and v=dcr, the at least two vertices of the contour of the normal section of the rotating piston (3) corresponding to a like number of said points of osculation.

4. A planetary-motion rotary-piston engine according to any one of claims 1-3, wherein the ratio between radii of the base circle and the rolling circle of said further hypotrochoid is 2:1, and the ratio between radii of the base circle and the rolling circle of said further peritrochoid is 2:3.

5. A planetary-motion rotary-piston engine according to any one of claims 1-3, wherein the ratio between radii of the base circle and the rolling circle of said further hypotrochoid is 2:1, and the ratio between radii of the base circle and the rolling circle of said further peritrochoid is 1:3.

6. A planetary-motion rotary-piston engine according to any one of claims 1-3, wherein the ratio between radii of the base circle and the rolling circle of said further hypotrochoid is 3:2, and the ratio between radii of the base circle and the rolling circle of said further peritrochoid is 1:2.

**Patentansprüche**

1. Drehkolbenmotor mit Planetenbewegung, mit

einem Gehäuse (1), das eine rohrförmige Kammer enthält, die als aufrechter, nicht kreisförmiger Zylinder geformt ist, der eine Achse ($O_1$-$O_2$) aufweist, wobei die rohrförmige Kammer, die an jedem Ende von zwei Seitengehäusen (2) begrenzt wird, geometrisch zwei Grundkörpern des aufrechten, nicht kreiförmigen Zylinders entspricht,
einer Kurbelwelle (4), die eine Hauptwelle aufweist und die Seitengehäuse (2) der rohrförmigen Kammer entlang der Achse ($O_1$-$O_2$) durchdringt,
einer exzentrischen Welle (7), die eine Hauptwelle aufweist und koaxial an einem Kurbelzapfen ($Q_1$-$Q_2$) der Kurbelwelle (4) angebracht ist,
einem Drehkolben (3), der drehbar an der exzentrischen Welle (7) angebracht ist, wobei der Drehkolben (3) als aufrechtes Prisma geformt ist, das zwei Grundkörper aufweist, die kontinuierlich an dem Seitengehäuse (2) der rohrförmigen Kammer gleiten,
einer ersten Getriebeeinheit und einer zweiten Getriebeeinheit, die angeordnet sind, um die Drehbewegung des Drehkolbens (3) auf die Drehbewegung der Kurbelwelle (4) zu übertragen, wobei die erste Getriebeeinheit ein erstes feststehendes Rad (5), das koaxial an dem einen der Seitengehäuse (2) der rohrförmigen Kammer festgelegt ist, und ein erstes drehbares Rad (6) aufweist, die miteinander in Eingriff stehen, wobei die zweite Getriebeeinheit ein zweites feststehendes Rad (8), das koaxial an dem Kurbelzapfen ($Q_1$-$Q_2$) festgelegt ist, und ein zweites drehbares Rad (9) aufweist, das koaxial an dem Drehkolben (3) festgelegt ist, wobei das zweite feststehende Rad (8) und das zweite drehbare Rad (9) die miteinander in Eingriff stehen, und
Verbindungsleitungen (10, 11) für den Gasaustausch, deren Öffnen und Schließen von dem Drehkolben (3) gesteuert werden,
**dadurch gekennzeichnet**, daß

- der Umriß des Normalschnitts der rohrförmigen Kammer durch eine äußere Umhüllung einer Familie von Kurven definiert ist, die den Umriß des Normalschnitts des Drehkolben (3) bestimmen,
- der Umriß des Normalschnitts des Drehkolbens (3) durch eine zusammengesetzte Trochoide definiert ist, die aus einer Hypotrochoide und einer Peritrochoide zusammengesetzt ist, wobei der generische Punkt (v,w) der zusammengesetzten Trochoide durch ein erstes Paar von Parametergleichungen definiert ist:

$$v=-c(r-b)\cos\omega-(a-b)\cos(1-r)\omega-ha\cos\{(1-r/b+r/a)\omega+\beta c\}\ \text{und}$$

$$w=-c(r-b)\sin\omega-(a-b)\sin(1-r/b)\omega-ha\sin\{(1-r/b+r/a)\omega+\beta c\}$$

wobei

$c(r-b)$ gleich der Länge des exzentrischen Armes der Hypotrochoide ist,
$(a-b)$ gleich der Länge des generischen Armes der Hypotrochoide und der Länge des exzentrischen Armes der Peritochoide ist,
ha gleich der Länge des generischen Armes der Peritrochoide ist,
$\omega$ die Winkelgeschwindigkeit des exzentrischen Armes der Hypotrochoide ist,
$(1-r/b)\omega$ die Winkelgeschwindigkeit des generischen Armes der Hypotrochoide und auch die Winkelgeschwindigkeit des exzentrischen Armes der Peritrochoide ist,
$(1-r/b+r/a)\omega$ die Winkelgeschwindigkeit des generischen Armes der Peritrochoide ist, und
$\beta c$ gleich dem Phasenwinkel des generischen Armes der Peritrochoide ist,

- die Hypotrochoide durch einen Grundkreis (32) mit dem Radius cr und einen Rollkreis (33) mit dem Radius cb erzeugt wird,

- die Peritrochoide durch einen Grundkreis (34) mit dem Radius b und einen Rollkreis (35) mit dem Radius a erzeugt wird,
- die Familie von Kurven durch ein zweites Paar von Parametergleichungen definiert ist:

$$x=(a-b)\cos\theta+c(r-b)\cos(1-a/b)\theta+v\cos\{(1-a/b+a/r)\theta+\beta\}-w\sin\{(1-a/b+a/r)\theta+\beta\}\text{ und}$$

$$y=(a-b)\sin\theta+c(r-b)\sin(1-a/b)\theta-v\sin\{(1-a/b+a/r)\theta+\beta\}+w\cos\{(1-a/b+a/r)\theta+\beta\},$$

wobei

(a-b) gleich dem Abstand zwischen der Achse der Hauptwelle der Kurbelwelle (4) und der Achse des Kurbelzapfens der Kurbelwelle (4) ist,
c(r-b) gleich dem Abstand zwischen der Achse der Hauptwelle der exzentrischen Welle (7) und einer Achse eines exzentrischen Rades an der exzentrischen Welle (7) ist,
θ die Winkelgeschwindigkeit der Kurbelwelle (4) ist,
(1-a/b)θ die Winkelgeschwindigkeit der exzentrischen Welle (7) ist,
(1-a/b+a/r)θ die Winkelgeschwindigkeit des Drehkolbens (3) ist, und
β gleich dem Phasenwinkel des Drehkolbens (3) und dem Phasenwinkel der zusammengesetzten Trochoide ist,

- die Familie von Kurven geometrisch eine Struktur einer weiteren zusammengesetzten Trochoide aufweist, die aus einer weiteren Hypotrochoide und einer weiteren Peritrochoide zusammengesetzt ist,
- die weitere Hypotrochoide durch einen Basiskreis (25) mit dem Radius a und einen Rollkreis (26) mit dem Radius b erzeugt wird,
- die weitere Peritrochoide durch einen Grundkreis (27) mit dem Radius cb und einen Rollkreis (28) mit dem Radius cr erzeugt wird, wobei die Länge des exzentrischen Armes der weiteren Hypotrochoide gleich a-b ist, wobei die beiden Längen des generischen Armes der weiteren Hypotrochoide und des exzentrischen Armes der weiteren Peritrochoide gleich c(r-b) sind,
- der Drehkolben (3) geometrisch an dem Rollkreis (28) der weiteren Peritrochoide festgelegt ist, wobei die Winkelgeschwindigkeit des Drehkolbens (3) (1-a/b+a/r)θ ist, und wobei der Phasenwinkel des Drehkolbens (3) gleich β ist,
- die Kurbelwelle (4) sich wie der exzentrische Arm der weiteren Hypotrochoide bewegt, wobei die Winkelgeschwindigkeit der Kurbelwelle (4) θ ist, und wobei der Abstand zwischen der Achse der Hauptwelle der Kurbelwelle (4) und der Achse des Kurbelzapfens der Kurbelwelle (4) gleich a-b ist,
- die exzentrische Welle (7) sich wie der generische Arm der weiteren Hypotrochoide und wie der exzentrische Arm der weiteren Peritrochoide bewegt, wobei die Winkelgeschwindigkeit der exzentrischen Welle (7) (1-a/b)θ ist, und wobei der Abstand zwischen der Achse der Hauptwelle der exzentrischen Welle (7) und der Achse des exzentrischen Rades an der exzentrischen Welle (7) gleich c(r-b) ist,
- das erste feststehende Rad (5) koaxial zu der Hauptwelle der Kurbelwelle 849 ist und sich wie der Grundkreis (25) der weiteren Hypotrochoide bewegt,
- das erste drehbare Rad (6) sich wie der Rollkreis (26) weiteren Hypotrochoide bewegt,
- das zweite feststehende Rad (8) sich wie der Grundkreis (27) der weiteren Peritrochoide bewegt, und
- das zweite drehbare Rad (9) sich wie der Rollkreis (28) der weiteren Peritrochoide bewegt.

2. Drehkolbenmotor mit Planetenbewegung nach Anspruch 1, wobei der Normalschnitt des Drehkolbens (3) einen Umriß aufweist, der zumindest zwei Scheitel hat, von denen jeder als Kreisbogen geformt ist, dessen Mitte einen generischen Punkt der weiteren zusammengesetzten Trochoide bildet, der durch w=0 und v=dcr bedingt ist und ein Endpunkt des generischen Armes der weiteren Peritrochoide ist, wobei dcr gleich der Länge des generischen Armes der weiteren Peritrochoide ist und geometrisch dem Abstand zwischen der Achse des Drehkolbens (3) und der Mitte des einen der kreisbogenförmigenScheitelpunkte des Umrisses des Normalschnitts des Drehkolbens (3) entspricht, und

der Umriß des Normalschnitts der rohrförmigen Kammer durch eine äußere Umhüllung einer Familie von Kurven definiert ist, die die kreisbogenförmigen Scheitelpunkte des Umrisses des Normalschnitts des Drehkolbens (3) bestimmen.

3. Drehkolbenmotor mit Planetenbewegung nach Anspruch 1, wobei der Umriß des Normalschnitts der rohrförmigen Kammer durch eine versetzte zusammengesetzte Trochoide definiert ist, bei welcher die weitere zusammengesetzte Trochoide, die durch w=0 und v=dcr bedingt ist, parallel nach außen in einem festgelegten Abstand t entlang einer Normallinie zu der weiteren zusammengesetzten Trochoide versetzt wurde, die durch w=0 und v=dcr , t≥0, bedingt ist, wobei eine innere Umhüllung und eine äußere Umhüllung einer Familie von Kurven der weiteren zusammengesetzten Trochoide, die durch w=0 und v=dcr bedingt ist, zumindest zwei Berührungspunkte aufweisen, und

der Normalschnitt des Drehkolbens (3) einen Umriß aufweist, der zumindest zwei Scheitel hat, von denen jeder als Kreisbogen geformt ist, dessen Radius gleich dem festgelegten Abstand t ist und dessen Mitte einen generischen Punkt der weiteren zusammengesetzten Trochoide bildet, der durch w=0 und v=dcr bedingt ist, wobei zumindest die beiden Scheitel des Umrisses des Normalschnitts des Drehkolbens (3) einer gleichen Anzahl der Berührungspunkte entsprechen.

4. Drehkolbenmotor mit Planetenbewegung nach einem der Ansprüche 1-3, wobei das Verhältnis zwischen den Radien des Grundkreises und des Rollkreises der weiteren Hypotrochoide 2:1 ist und das Verhältnis zwischen den Radien des Grundkreises und des Rollkreises der weiteren Peritrochoide 2:3 ist.

5. Drehkolbenmotor mit Planetenbewegung nach einem der Ansprüche 1-3, wobei das Verhältnis zwischen den Radien des Grundkreises und des Rollkreises der weiteren Hypotrochoide 2:1 ist und das Verhältnis zwischen den Radien des Grundkreises und des Rollkreises der weiteren Hypotrochoide 1:3 ist.

6. Drehkolbenmotor mit Planetenbewegung nach einem der Ansprüche 1-3, wobei das Verhältnis zwischen den Radien des Grundkreises und des Rollkreises der weiteren Hypotrochoide 3:2 ist und das Verhältnis zwischen den Radien des Grundkreises und des Rollkreises der weiteren Hypotrochoide 1:2 ist.

**Revendications**

1. Moteur à piston rotatif à mouvement planétaire, comportant un carter (1) contenant une cavité tubulaire réalisée sous la forme d'un cylindre droit non circulaire ayant un axe ($O_1$-$O_2$), la cavité tubulaire étant délimitée à chaque extrémité par deux carters latéraux (2) correspondant géométriquement aux deux bases du cylindre droit non circulaire, un vilebrequin (4) ayant un arbre principal et traversant les carters latéraux (2) de la cavité tubulaire suivant ledit axe ($O_1$-$O_2$), un arbre à excentrique (7) ayant un arbre principal et relié coaxialement à un maneton ($Q_1$-$Q_2$) dudit vilebrequin (4), un piston rotatif (3) relié en rotation à l'arbre à excentrique (7), le piston rotatif (3) étant réalisé sous la forme d'un prisme droit ayant deux bases glissant en continu sur les carters latéraux (2) de la cavité tubulaire,

une première unité d'engrenage et une seconde unité d'engrenage agencées de façon à transférer un mouvement de rotation du piston rotatif (3) en un mouvement de rotation du vilebrequin (4), la première unité d'engrenage comportant un premier élément d'engrenage fixe (5) fixé coaxialement à l'un des carters latéraux (2) de la cavité tubulaire et un premier élément d'engrenage roulant (6) fixé coaxialement à l'arbre principal de l'arbre à excentrique (7), le premier élément d'engrenage (5) et le premier élément d'engrenage roulant (6) étant en prise l'un avec l'autre, la seconde unité d'engrenage comportant un second élément d'engrenage fixe (8) fixé coaxialement au maneton ($Q_1$-$Q_2$) et un second élément d'engrenage roulant (9) fixé coaxialement au piston rotatif (3), le second élément d'engrenage fixe (8) et le second élément d'engrenage roulant (9) étant en prise l'un avec l'autre, et
des canaux (10, 11) de raccordement pour un échange de gaz, dont l'ouverture et la fermeture sont commandées par le piston rotatif (3),
caractérisé en ce que

- le contour de la section normale de la cavité tubulaire est défini par une enveloppe extérieure d'une famille de courbes déterminant le contour de la section normale du piston rotatif (3),
- le contour de la section normale du piston rotatif (3) est défini par une trochoïde composite composée d'une hypotrochoïde et d'une péritrochoïde, le point générique (v, w) de la trochoïde composite étant défini par une première paire d'équations paramétriques :

$$v=-c(r-b)\cos \omega-(a-b)\cos(1-r)\omega-hacos\{(1-r/b+r/a) \omega+\beta c\} \text{ et}$$

$$w=-c(r-b)\sin \omega-(a-b)\sin(1-r/b)\omega-hasin\{(1-r/b+r/a)\omega+\beta c\},$$

où

c(r-b) est égal à la longueur du bras d'excentrique de l'hypotrochoïde,
(a-b) est égal à la longueur du bras générique de l'hypotrochoïde et à la longueur du bras excentrique de la péritrochoïde,
ha est égal à la longueur du bras générique de la péritrochoïde,
ω est la vitesse angulaire du bras excentrique de l'hypotrochoïde,
(1-r/b)ω est la vitesse angulaire du bras générique de l'hyptrochoïde et, aussi, la vitesse angulaire du bras excentrique de la péritrochoïde,
(1-r/b+r/a)ω est la vitesse angulaire du bras générique de la péritrochoïde, et
βc est égal à l'angle de phase du bras générique de la péritrochoïde,

- l'hypotrochoïde est générée par un cercle de base (32) de rayon cr et par un cercle roulant (33) de rayon cb,
- la péritrochoïde est générée par un cercle de base (34) de rayon b et par un cercle roulant (35) de rayon a,
- ladite famille de courbes est définie par une seconde paire d'équations paramétriques :

$$x=(a-b)\cos\theta+c(r-b)\cos(1-a/b)\theta+v\cos\{(1-a/b+-a/r)\theta+\beta\}-w\sin\{(1-a/b+a/r)\theta+\beta\}\text{ et}$$

$$y=(a-b)\sin\theta+c(r-b)\sin(1-a/b)\theta+v\sin\{(1-a/b+a/r)\theta+\beta\}+w\cos\{(1-a/b+a/r)\theta+\beta\},$$

où

(a-b) est égal à la distance entre l'axe dudit arbre principal du vilebrequin (4) et l'axe du manneton du vilebrequin (4),
c(r-b) est égal à la distance entre l'axe dudit arbre principal de l'arbre à excentrique (7) et un axe d'une roue excentrique sur l'arbre à excentrique (7),
θ est la vitesse angulaire du vilebrequin (4),
(1-a/b)θ est la vitesse angulaire de l'arbre à excentrique (7),
(1-a/b+a/r)θ est la vitesse angulaire du piston rotatif (3), et
β est égal à l'angle de phase du piston rotatif (3) et à l'angle de phase de la trochoïde composite,

- ladite famille de courbes possède géométriquement une structure d'une autre trochoïde composite composée d'une autre hyptrochoïde et d'une autre péritrochoïde,
- ladite autre hypotrochoïde est générée par un cercle de base (25) de rayon a et par un cercle roulant (26) de rayon b,
- ladite autre péritrochoïde est générée par un cercle de base (27) de rayon cb et par un cercle roulant (28) de rayon cr, la longueur du bras excentrique de ladite autre hypotrochoïde étant égale à a-b, les deux longueurs du bras générique de ladite autre hypotrochoïdeet du bras excentrique de ladite autre péritrochoïde étant égales à c(r-b),
- le piston rotatif (3) est fixé géométriquement au cercle roulant (28) de ladite autre péritrochoïde, la vitesse angulaire du piston rotatif (3) étant (1-a/b+a/r)θ et l'angle de phase du piston rotatif (3) étant égal à β,
- le vilebrequin (4) se déplace en tant que bras excentrique de ladite autre hypotrochoïde, la vitesse angulaire du vilebrequin (4) étant θ, et la distance entre l'axe dudit arbre principal du vilebrequin (4) et l'axe du manneton du vilebrequin (4) étant égale à a-b,
- l'arbre à excentrique (7) se déplace en tant que bras générique de ladite autre hyptrochoïde et en tant que bras excentrique de ladite autre péritrochoïde, la vitesse angulaire de l'arbre à excentrique (7) étant (1-a/b)θ et la distance entre l'axe dudit arbre principal de l'arbre à excentrique (7) et l'axe de la roue excentrique sur l'arbre à excentrique (7) étant égale à c(r-b),
- le premier élément d'engrenage fixe (5) est coaxial avec ledit arbre principal du vilebrequin (4) et se déplace en tant que cercle de base (25) de ladite autre hypotrochoïde,
- le premier élément d'engrenage roulant (6) se déplace en tant que cercle roulant (26) de ladite autre hypotrochoïde,
- le second élément d'engrenage fixe (8) se déplace en tant que cercle de base (27) de ladite autre péritrochoïde, et
- le second élément d'engrenage roulant (9) se déplace en tant que cercle roulant (28) de ladite autre péritrochoïde.

**2.** Moteur à piston rotatif à mouvement planétaire selon la revendication 1, dans lequel la section normale du piston rotatif (3) présente un contour ayant au moins deux sommets dont chacun est réalisé sous la forme d'un arc de cercle dont le centre constitue un point générique de ladite autre trochoïde composite conditionnée par w=0 et v=dcr et étant un point extrême du bras générique de ladite autre péritrochoïde, dcr étant égal à la longueur du bras générique de ladite autre péritrochoïde et correspondant géométriquement à la distance entre l'axe du piston rotatif (3) et le centre de l'un des sommets en forme d'arc de cercle du contour de la section normale du piston rotatif (3), et

le contour de la section normale de la cavité tubulaire est défini par une enveloppe extérieure d'une famille de courbes déterminant les sommets en forme d'arc de cercle du contour de la section normale du piston rotatif (3).

**3.** Moteur à piston rotatif à mouvement planétaire selon la revendication 1, dans lequel le contour de la section normale de la cavité tubulaire est défini par une trochoïde composite translatée, dans laquelle ladite autre trochoïde composite conditionnée par w=0 et v=dcr a été translatée parallèlement vers l'extérieur sur une distance fixe t suivant une ligne normale à ladite autre trochoïde composite conditionnée par w=0 et v=dcr, t≥o, une enveloppe intérieure et une enveloppe extérieure d'une famille de courbes de ladite autre trochoïde composite conditionnée par w=0 et v=dcr ayant au moins deux points autotangentiels, et

la section normale du piston rotatif (3) présente un contour ayant au moins deux sommets dont chacun est configuré en arc de cercle dont le rayon est égal à ladite distance fixe t et dont le centre constitue le point générique de ladite autre trochoïde composite conditionnée par w=0 et v=dcr, les, au moins deux, sommets du contour de la section normale du piston rotatif (3) correspondant à un même nombre desdits points autotangentiels.

**4.** Moteur à piston rotatif à mouvement planétaire selon l'une quelconque des revendications 1-3, dans lequel le rapport entre des rayons du cercle de base et du cercle roulant de ladite autre hypotrochoïde est de 2:1, et le rapport entre des rayons du cercle de base et du cercle roulant de ladite autre péritrochoïde est de 2:3.

**5.** Moteur à piston rotatif à mouvement planétaire selon l'une quelconque des revendications 1-3, dans-lequel le rapport entre les rayons du cercle de base et du cercle roulant de ladite autre hypotrochoïde est de 2:1, et le rapport entre les rayons du cercle de base et du cercle roulant de ladite autre péritrochoïde est de 1:3.

**6.** Moteur à piston rotatif à mouvement planétaire selon l'une quelconque des revendications 1-3, dans lequel le rapport entre les rayons du cercle de base et le cercle roulant de ladite autre hypotrochoïde est de 3:2, et le rapport entre les rayons du cercle de base et du cercle roulant de ladite autre péritrochoïde est de 1:2.

FIG. 1

a:b=2:1
b:r=2:3
c=0.85
d=4.07
θ=0
β=0

EP 0 594 849 B1

FIG. 2

a:b=2:1
b:r=2:3
c=0.85
d=4.07
θ=0
β=0

EP 0 594 849 B1

FIG. 3

B2

B1

a:b = 2:1
b:r = 2:3
c = 0.85
d = 4.07
$\theta$ = 0
$\beta$ = 0

FIG. 4

a:b=2:1
b:r=2:3
c=0.85
d=4.07
θ=0
β=0

EP 0 594 849 B1

FIG. 5

a:b=2:1
b:r=2:3
c=0.85
d=4.07
θ=0
β=0

FIG. 6

a:b=3:2
b:r=1:2
c=0.87
d=3
$\theta = \dfrac{\pi}{6}$
$\beta = \dfrac{\pi}{2}$

FIG. 7

a:b=3:2
b:r=1:2
c=0.87
d=3
$\theta = \dfrac{\pi}{6}$
$\beta = \dfrac{\pi}{2}$

FIG. 8

a:b=2:1
b:r=1:2
c=1
d=4
$\theta=0$
$\beta a=0$
$\beta b=0$
$\beta=0$

FIG. 9

a:b=2:1
b:r=2:3
c=0.85
β=0

FIG. 10

a:b=2:1
b:r=2:3
c=0.85
d=4.1
β=0

33

FIG. 11

a:b=3:2
b:r=1:2
c=0.8
$\beta=\dfrac{\pi}{2}$

FIG. 12

a:b=3:2
b:r=1:2
c=0.9
d=2.8
$\beta=\dfrac{\pi}{2}$

FIG. 13

a:b=2:1
b:r=1:2
c=1
β=0

FIG. 14

a:b=2:1
b:r=1:2
c=1
β=0

FIG. 15

D=2.8
D=5.2
25

a:b=2:1
b:r=2:3
c=0.8
d=2.8~5.2
Δd=0.2
β=0

FIG. 16

D=2.4
D=4.4
25

a:b=2:1
b:r=2:3
c=0.9
d=2.4~4.4
Δd=0.2
β=0

FIG. 17

D=2.5
D=3.4
25

a:b=2:1
b:r=2:3
c=1
d=2.5~3.4
Δd=0.3
$\beta=\frac{1}{3}\pi$

FIG. 18

D=1.9
D=3.4
25

a:b=2:1
b:r=1:3
c=1
d=1.9~3.4
Δd=0.3
β=0

FIG. 19

D=2
D=2.8
25

a:b=2:1
b:r=1:3
c=1
d=2~2.8
△d=0.4
β=1/3 π

FIG. 20

D=1.6
D=3
25

a:b=3:2
b:r=1:2
c=0.95
d=1.6~3
△d=0.2
β=1/2 π

FIG. 21

D=1.7
D=1.9
25

a:b=3:2
b:r=1:2
c=1
d=1.7~1.9
△d=0.2
β=0

FIG. 22

D=3
D=4.8
25

a:b=3:1
b:r=1:2
c=1
d=3~4.8
△d=0.3
β=1/2 π

FIG. 23

y     x

25

D=1.5
D=2.7

a:b=2:1
b:r=1:4
c=1
d=1.5~2.7
△d=0.3
β=$\frac{1}{4}$π

FIG. 24

y     x

25

D=2.7
D=4.8

a:b=2:1
b:r=3:4
c=1
d=2.7~4.8
△d=0.3
β=$\frac{1}{4}$π

FIG. 25

y     x

25

D=5
D=8

a:b=3:1
b:r=5:6
c=1
d=5~8
△d=0.5
β=$\frac{1}{2}$π

FIG. 26

y     x

25

D=3.2
D=2.6

a:b=4:3
b:r=1:3
c=1
d=2.6~3.2
△d=0.2
β=$\frac{1}{3}$π

FIG. 27

35

32

33

34

a:b=2:1
b:r=2:3
c=0.8
β=0

FIG. 28

25

a:b=2:1
b:r=2:3
c=0.9
d=3.6
β=0

FIG. 29

25

a:b=2:1
b:r=2:3
c=1
d=3.9
β=⅓π

FIG. 32

Y

25

X

a:b=3:2
b:r=1:2
c=0.95
d=2.9
$\beta=\frac{1}{2}\pi$

FIG. 30

Y

25

X

a:b=2:1
b:r=1:3
c=1.1
d=3.2
$\beta=0$

FIG. 33

Y

25

X

a:b=3:2
b:r=1:2
c=1
d=2.2
$\beta=0$

FIG. 31

Y

25

X

a:b=2:1
b:r=1:3
c=1
d=3.2
$\beta=\frac{1}{3}\pi$

EP 0 594 849 B1

FIG. 34

$a:b=2:1$
$b:r=1:4$
$c=1$
$d=2.4$
$\beta=\frac{1}{4}\pi$

FIG. 35

$a:b=2:1$
$b:r=3:4$
$c=1$
$d=3.9$
$\beta=\frac{1}{4}\pi$

FIG. 36

$a:b=3:1$
$b:r=5:6$
$c=1$
$d=7.5$
$\beta=\frac{1}{2}\pi$

FIG. 37

$a:b=4:3$
$b:r=1:3$
$c=1$
$d=3$
$\beta=\frac{1}{3}\pi$

FIG. 38

$a{:}b=2{:}1$
$b{:}r=2{:}3$
$c=1$
$h=2.5$
$\beta c=\frac{1}{2}\pi$
$\beta e=0$

FIG. 39

$a{:}b=2{:}1$
$b{:}r=1{:}3$
$c=1$
$h=4.1$
$\beta c=\frac{1}{2}\pi$
$\beta e=0$

FIG. 40

$a{:}b=3{:}2$
$b{:}r=1{:}2$
$c=1.15$
$h=3.3$
$\beta c=0$
$\beta e=\frac{1}{2}\pi$

FIG. 41

$a{:}b=2{:}1$
$b{:}r=2{:}3$
$c=0.9$
$d=3.9$
$t=0.2a$
$\beta=0$

FIG. 42

$\theta = 90°$

FIG. 43

$\theta = 180°$

FIG. 44

$\theta = 270°$

FIG. 45

$\theta = 360°$

FIG. 46

$\theta = 450°$

FIG. 47

$\theta = 540°$

FIG. 48

$\theta = 630°$

FIG. 49

$\theta = 720°$

FIG. 50

$\theta = 810°$

FIG. 51

$\theta = 900°$

FIG. 52

$\theta = 990°$

FIG. 53

$\theta = 1080°$

44

FIG. 54

$\theta = 630°$

FIG. 55

$\theta = 648°$

FIG. 56

$\theta = 666°$

FIG. 57

$\theta = 684°$

FIG. 58

$\theta = 702°$

FIG. 59

$\theta = 720°$

EP 0 594 849 B1

FIG. 60

FIG. 61

$\theta=0°$

FIG. 62

FIG. 63

$\theta=240°$

$\theta=105°$

FIG. 64

FIG. 65

$\theta=480°$

$\theta=345°$

$\theta=585°$

FIG. 66

FIG. 67

$\theta = 720°$

FIG. 68

FIG. 69

$\theta = 825°$

$\theta = 960°$

$\theta = 1065°$

FIG. 70

FIG. 71

$\theta=0°$

$\theta=105°$

FIG. 72

FIG. 73

$\theta=240°$

$\theta=345°$

FIG. 74

FIG. 75

$\theta=480°$

$\theta=585°$

FIG. 76

$\theta = 720°$

FIG. 77

$\theta = 825°$

FIG. 78

$\theta = 960°$

FIG. 79

$\theta = 1065°$

FIG. 80

$\theta = 1200°$

FIG. 81

$\theta = 1305°$